# EUROPEAN PATENT SPECIFICATION

(11) **EP 3 899 099 B1**
(45) Date of publication and mention of the grant of the patent: **01.03.2023**
(21) Application number: 19817206.6
(22) Date of filing: 03.12.2019
(51) Int. Cl.: H01M 8/0254, H01M 8/2432, H01M 8/0232, H01M 8/0273, H01M 8/2483, H01M 8/1286, H01M 8/021, H01M 8/0228, H01M 8/124, H01M 8/0245, H01M 8/0282, C25B 1/04, C25B 9/73, C25B 9/77, H01M 8/12

(54) **FUEL CELL UNIT AND FUEL CELL STACK**
BRENNSTOFFZELLENEINHEIT UND BRENNSTOFFZELLENSTAPEL
UNITÉ DE PILE À COMBUSTIBLE ET EMPILEMENT DE PILES À COMBUSTIBLE

(30) Priority: 20.12.2018 GB 201820805; 24.10.2019 GB 201915440
(43) Date of publication of application: 27.10.2021
(60) Divisional application: 23151410.0
(73) Proprietor: Ceres Intellectual Property Company Limited, West Sussex RH13 5PX (GB)
(72) Inventor: REES, Lee David, Horsham West Sussex RH13 5PX (GB); FREEMAN, Euan Norman Harvey, Horsham West Sussex RH13 5PX (GB); DOMANSKI, Tomasz, Horsham West Sussex RH13 5PX (GB); NOBBS, Christopher James, Horsham West Sussex RH13 5PX (GB)
(74) Representative: Dunlop, Hugh Christopher
(86) International application number: PCT/EP2019/083549
(87) International publication number: WO 2020/126486

(56) References cited:
- US-A1- 2009 226 786
- US-A1- 2011 129 756
- US-A1- 2015 311 559
- US-A1- 2015 318 563

## Description

The present invention relates to an improved electrochemical fuel cell unit and to a stack comprising a plurality of such electrochemical fuel cell units, as well as a method of manufacturing the same. The present invention more specifically relates to metal-supported fuel cells, in particular, metal-supported solid oxide fuel cell units of either the oxidizer type (MS-SOFC) or electrolyser type (MS-SOEC), and stacks thereof.

Some fuel cell units can produce electricity by using an electrochemical conversion process that oxidises fuel to produce electricity. Some fuel cell units can also, or instead, operate as regenerative fuel cells (or reverse fuel cells) units, often known as solid oxide electrolyser fuel cell units, for example to separate hydrogen and oxygen from water, or carbon monoxide and oxygen from carbon dioxide. They may be tubular or planar in configuration. Planar fuel cell units may be arranged overlying one another in a stack arrangement, for example 100-200 fuel cell units in a stack, with the individual fuel cell units arranged electrically in series.

A solid oxide fuel cell that produces electricity is based upon a solid oxide electrolyte that conducts negative oxygen ions from a cathode to an anode located on opposite sides of the electrolyte. For this, a fuel, or reformed fuel, contacts the anode (fuel electrode) and an oxidant, such as air or an oxygen rich fluid, contacts the cathode (air electrode). Conventional ceramic-supported (e.g. anode-supported) SOFCs have low mechanical strength and are vulnerable to fracture. Hence, metal-supported SOFCs have recently been developed which have the active fuel cell component layer supported on a metal substrate. In these cells, the ceramic layers can be very thin since they only perform an electrochemical function: that is to say, the ceramic layers are not self-supporting but rather are thin coatings/films laid down on and supported by the metal substrate. Such metal supported SOFC stacks are more robust, lower cost, have better thermal properties than ceramic-supported SOFCs and can be manufactured using conventional metal welding techniques.

US 2011/0129756 A1 (TOPSOE FUEL CELL AS) relates to an interconnect for a fuel cell. US 2015/0311559 A1 (HONDA MOTOR CO LTD) relates to an electrolyte electrode assembly includes an anode, a cathode, and an electrolyte interposed between the anode and the cathode. US2009/0226786 A1 (SELCUK et. al.) relates to current collectors for fuel cells. US 2015/0318563 A1 of NGK Spark Plug Co.) relates to a fuel cell with separator.

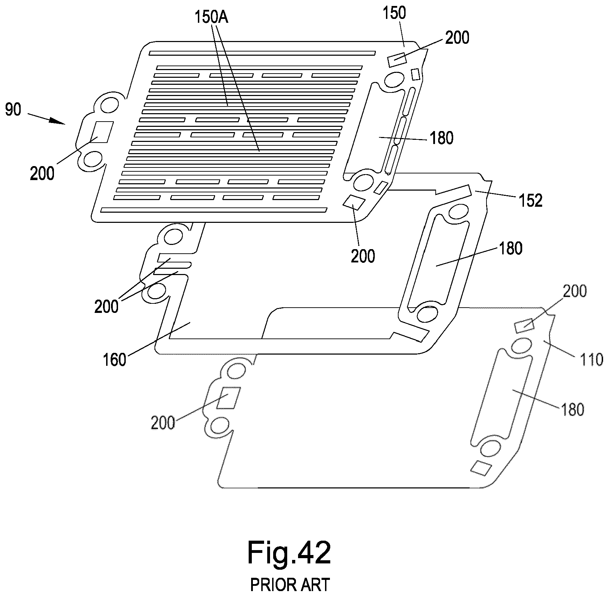

Applicant's earlier WO2015/136295 discloses metal-supported SOFCs in which the electrochemically active layer (or active fuel cell component layer) comprises respective anode, electrolyte and cathode layers respectively deposited (e.g. as thin coatings/films) on and supported by a metal support plate 110 (e.g. foil). The metal support plate has a porous region surrounded by a non-porous region with the active layers being deposited upon the porous region so that gases may pass through the pores from one side of the metal support plate to the opposite side to access the active layers coated thereon. As shown in figure 42, the fuel cell unit 90 comprises three plates or layers - the metal support plate 110, a separator plate 150 and a spacer plate 152 sandwiched between them. It also has fluid ports 180, 200 (for oxidant or fuel) and the three plates are stacked upon one another and welded (fused together) through the spacer plate 152 to form a single metal-supported solid oxide fuel cell unit with a fluid volume in the middle defined by the large space 160 provided in the spacer plate 152. The metal components of the fuel cell stack repeat layer are in electrical contact with one another, with electron flow between them being primarily via the fuse/weld path, thereby avoiding surface-to-surface contact resistance losses.

As discussed in WO2015/136295, on the metal support plate 110, small apertures (not shown) are provided through the metal support plate 110, in a location to overlie the anode (or cathode, depending on the polarity orientation of the electrochemically active layer), which is positioned under the metal support plate 110. These are positioned in the large space or aperture 160 defined by the spacer plate 152 so as to allow the fluid volume to be in fluid communication with the electrochemically active layers on the underside of the support plate 110 through the small apertures.

In the separator plate 150, up and down corrugations 150A are provided to extend up to the cathode (or anode, depending on the polarity orientation of the electrochemically active layers) of a subsequent fuel cell unit stacked onto this fuel cell unit, and down to the metal support plate 110 of its own fuel cell unit. This thus electrically connects between adjacent fuel cells units of a stack to put the electrochemically active layers of the stack (usually one on each fuel cell unit) in series with one another.

A solid oxide electrolyser cell (SOEC) may have the same structure as an SOFC but is essentially that SOFC operating in reverse, or in a regenerative mode, to achieve the electrolysis of water and/or carbon dioxide by using the solid oxide electrolyte to produce hydrogen gas and/or carbon monoxide and oxygen.

The present invention is directed at a stack of repeating solid oxide fuel cell units having a structure suitable for use as an SOEC or an SOFC. For convenience, SOEC or SOFC stack cell units will both hereinafter be referred to as "fuel cell units" or simply "cell units" (i.e. meaning SOEC or SOFC stack cell units).

The present invention seeks to simplify the structure of the fuel cell unit as there is a continual drive to increase the cost-efficiency of fuel cells - reducing their cost of manufacture would be of significant benefit to reduce the entry cost of fuel cell energy production.

According to the present invention there is provided a metal-supported solid oxide fuel cell unit comprising:
a separator plate; and
a metal support plate carrying fuel cell chemistry layers provided over a porous region;
the separator plate and the metal support plate overlying one another to form a repeat unit;
wherein:
   at least one of the separator plate and the metal support plate comprises flanged perimeter features formed by pressing the plate to a concave configuration;
   the separator plate and the metal support plate are directly adjoined at the flanged perimeter features to form a fluid volume therebetween;
   at least one fluid port is provided in each of the separator plate and the metal support plate within the flanged perimeter features, the respective fluid ports being aligned and in communication with the fluid volume; and
   at least one of the separator plate and the metal support plate is provided with shaped port features formed around its port by pressing, which shaped port features extend towards the other plate, and elements of the shaped port features are spaced from one another to define fluid pathways between the elements from the port to enable passage of fluid from the port to the fluid volume.

In the present invention, instead of all three of the metal support plate, the spacer and the separator plate being needed, only two of these layers (components) are required, i.e. the metal support plate and the separator plate, while still ultimately operating in substantially the same way, with substantially the same output per square centimeter of electrochemically active layer per cell unit. In other words there is no separate sheet member acting as a spacer between them, while the cell unit still operates in the same manner. This simplifies the number of components needing to be supplied and treated (e.g. coated) and simplifies the assembly, as well as providing an immediate reduction in the amount of material needed, and thus a reduction in both the material cost and weight of each fuel cell unit.

The concave configuration can give the relevant plate the appearance of a rimmed tray, with a correspondingly convex outside shape (outside relative to the fuel cell unit) and usually a planar base, the concavity thus defining (e.g. part of) the fluid volume in the assembled cell unit.

In this concave configuration, the flanged perimeter features extend out of a plane of the original sheet of the separator plate, and/or of the metal support plate, toward a respective opposed surface of the other of the separator plate and the metal support plate.

The fluid volume is thus bordered by formed flanged perimeter features, which are formed by pressing, such as by use of a die press, hydroforming or stamping. These are simple processes that are already being undertaken in the formation of central projections in the fluid volume, as found likewise on the separator plate in the prior art, for supporting and electrically connecting adjacent fuel cells via the electrochemically active layers.

These central projections include in and out - up and down as shown - projections extending between the internal opposed surfaces of the two plates and an outer surface of the electrochemically active layer of the cell unit adjacent to the outward projections. They also define fluid pathways between them, or in them for the outward projections (relative to the fuel cell unit), thus defining fluid pathways through the fluid volume between fluid ports at each end of the fuel cell unit.

In the present invention, the central in and out projections are thus also pressed from the original sheet for the separator plate, either before or after the flanged perimeter features and the shaped features, but more preferably at the same time.

In some embodiments the central projections are round. They may be other shapes, including elongated, or corrugations similar to those in the prior art. They need not be in the direct centre of the separator plate, although they can be distributed relative thereto, but they will generally be between in and out fluid ports of the fuel cell unit, and are thus central relative to them.

Typically there will be at least two fluid ports provided in each of the separator plate and the metal support plate within the flanged perimeter features, i.e. within the area of those plates surrounded by the flanged perimeter features. These are typically an in port and an out port. There may be more than one in port and/or more than one out port. For example, a port may be provided in each corner of the plates.

In some embodiments the porous region is formed by holes drilled into the metal support plate - usually laser drilled.

In some embodiments the (active) fuel cell chemistry layers takes the form of an electrochemically active layer comprising an anode, an electrolyte and a cathode formed (e.g. coated or deposited) onto the metal support plate over the porous region that is provided within the metal support plate in such embodiments. This arrangement with the (non self-supporting, thin) chemistry layers provided directly on the metal support plate requires the minimum number of components. The metal support plate thus performs a dual function of supporting the cell chemistry and defining the fluid volume (together with the separator). Moreover, it will be appreciated that both the metal support plate and the separator have an oxidant-exposed side and a fuelexposed side, and thus are components that are subjected to a demanding dual atmospheric environment.

In other embodiments the porous region is provided on a separate plate (e.g. metal foil) over which the fuel cell chemistry layers are formed (e.g. coated or deposited), and the separate plate (carrying the fuel cell chemistry layers) is provided over a window (e.g. a frame) on the metal support plate.

There can be multiple areas of fuel cell chemistry layers. For example there can be multiple areas of small holes in the metal support plate covered by separate, respective electrochemically active layers. Alternatively there can be multiple windows in the metal support plate and multiple separate plates onto (over) which the active cell (fuel cell) chemistry layers are formed located above those windows.

The or each separate plate may be welded onto the metal support plate over a window in the metal support plate. The central projections extending between the internal opposed surfaces of the two plates thus then extend all the way up to the internal surface of the separate plate(s).

In some embodiments, the shaped port features and/or the in and out projections in the central region of the fuel cell, overlying the electrochemically active layer, have a substantially circular cross-section when bisected in a direction of the plane of the separator plate or metal support plate.

It is simple and inexpensive to form the flanged perimeter features, port features and any projections from a (e.g. initially flat) separator plate or metal support plate having an initial (substantially) uniform material thickness (i.e. across the full extent of the plate), when performing the pressing step. By contrast, forming plates with thicker and thinner areas by etching to remove material so as to provide fluid flow volumes/channels or flanged features is difficult, time consuming and wasteful of material.

In some embodiments, the fluid pathways from the fluid port to the fluid volume are tortuous and/or cross one another at a plurality of locations, such as via an array of staggered dimples, or arrangements of staggered elements.

In some embodiments the shaped port features and the in and out projections in the central portion of the fluid volume are dimples, preferably with round sections as defined above.

The shaped port features define pathways that form part of the fluid volume so the fluid pathways extend from the port, between the elements, to an open area and further fluid pathways extend through an "active area" of the cell unit between electrochemically active layers of adjacent fuel cells (i.e. when in the stack). In the open area, flow diverters can be provided to spread fluid flow within the active area across the full width of the active area.

Preferably the metal of the metal support layer is steel (e.g. stainless steel) - there are many suitable ferritic steels (e.g. ferritic stainless steels) that may be used.

Preferably the separator plate is formed of a similar, or the same, kind of metal as the metal support layer.

In some embodiments the flanged perimeter features are only provided on the separator plate. This simplifies production, as the separator plate is already being pressed in the central region, whereas the metal support plate only needs cutting to a required configuration.

In some embodiments, the shaped port features are only provided on the separator plate. This likewise simplifies production, as the separator plate is already being pressed in the central region, whereas the metal support plate only needs cutting.

In some embodiments the shaped port features are the same height above the surface from which they extend as the distance between opposed inner surfaces of the two plates. As such they extend to the inner plane of the opposed surface of the other of the plates. In this way, such features may be provided in only one surface acting as hard stops in order to transfer the compression load around the port whilst maintaining the required fluid channels open. However, opposed shaped port features could be provided extending towards each other from both surfaces to abut one another to perform the same function.

Using pressings from the sheet for the metal support plate and/or the sheet for the separator plate to form the flanged perimeter features, the shaped port features and the in and out projections in the central region of the separator plate ensures that the mechanism for supporting the height of the fluid volume is formed from the same thin foil substrate as the rest of the metal support plate and/or separator plate, thus maintaining a low weight for each cell unit.

In some embodiments the at least one fluid port comprises a fuel port, the fluid volume in the fuel cell unit thus comprising a fuel volume between the separator plate and the metal support plate.

In these embodiments, the fuel cell chemistry layers would usually be formed on the outer surface of the metal support plate.

In some embodiments, the at least one fluid port comprises an oxygen containing fluid port, and the fluid volume comprises an oxygen containing fluid volume between the separator plate and the metal support plate.

In these embodiments the fuel cell component layers would usually be provided on the inner surface of the metal support plate.

In some embodiments, at least one of the separator plate and the metal support plate is provided with one or a plurality of raised members formed by pressing, which members extend away from the other plate. Beneficially these can be arranged around the or each fluid port.

As described above, the shaped port features (on at least one of the plates) can extend towards the other (i.e. of the separator plate and the metal support plate) plate of the respective fuel cell unit. By being disposed within the fluid volume between the two plates, they may be regarded as features provided on the interior surfaces of a fuel cell unit. They preserve the internal spacing and transmit loads. The raised members, on the other hand, extend (on at least one of the plates) away from the other (i.e. of the separator plate and the metal support plate) plate (of the same unit). They can be, for example, arranged in a ring around the port, and may thus be regarded as features provided on the exterior surfaces of a respective fuel cell unit that act between adjacent fuel cell units. Depending on their configuration, arrangement and respective height they may perform a locating function, a hard stop function (preserving a spacing/transmitting load/limiting compression), a fluid distribution function, and/or a seal support function.

A plurality of raised members may be so arranged to define a space for accommodating a gasket within the raised members and/or a plurality of raised members may be so arranged to define a perimeter for accommodating a gasket outside of the raised members. When a stack is assembled with a stacking arrangement whereby a fuel cell unit and gasket are alternately stacked upon one another to form a single repeat unit of the stack, significant time and effort may be expended in retaining each gasket in an appropriate location relative to the centre of the port e.g. using gluing or tooling. However, the raised members may be used to locate a gasket laterally i.e. centre it around a port. Conveniently, the raised members may define an internal space/region configured for accommodating a gasket within the raised members, preferably a space and shape closely sized to match the gasket external periphery so as to receive and locate the gasket in a desired position, obviating the need for it to be located and held in position by other steps during assembly. In addition, or alternatively, some raised members may be so arranged to define an exterior periphery for accommodating an internal periphery (again of a matching size and shape) of a gasket around the outside of the raised members.

In some embodiments, a plurality of raised members are interspersed amongst the shaped port features.

Alternatively, the or each raised member may be positioned outside of the shaped port features. Preferably each raised member is positioned radially beyond the shaped port features, relative to the centre of the port.

The or each raised member may have a peak that defines a hard stop surface against which an adjacent fuel cell unit, or a part extending therefrom, can bear during assembly of a stack of the fuel cell units. Such a hard stop (surface) may preserve the spacing between fuel cell units and assist in transferring compression load through the stack in the vicinity of the ports. There may be multiple raised members defining hard stop surfaces and the hard stop surfaces may all lie in a common plane.

The present invention also provides a fuel cell stack comprising a plurality of such fuel cell units stacked upon one another with seals around the fluid ports between adjacent fuel cell units, the seals preferably overlying the shaped port features around the fluid ports between adjacent fuel cell units. The aligned fluid ports and seals thus form an internal oxidant or fuel manifold or "chimney" within the fuel cell stack, preventing mixing of oxidant and fuel.

The seals may comprise gaskets. These can be pre-formed sealing devices, i.e., components such as a ring or sheet of a suitable shape used for sealing between two surfaces. As described above, in a stacking arrangement whereby a fuel cell unit and gasket are alternately stacked upon one another to form a single repeat unit of the stack, the raised members may be used to locate each gasket laterally i.e. centre it around a port. Where the raised members are so arranged to define a space for accommodating a gasket, the method of assembly may obviate the need for a gluing step or any other method for securing a gasket in place.

Alternatively, the seals may comprise in situ seals (i.e. non self-supporting seals formed in situ), for example, formed from a sealing contact paste or liquid that is applied to one of the plates around the port where it bonds to the surface and solidifies in situ to provide a sealant around the port. The paste may be an elastomeric curable sealing paste. Advantageously, by replacing pre-formed gaskets with such seals such a stack can be assembled only by stacking the fuel cell units directly on top of each other, these being the only components forming the stack repeat units of the stack.

The seals may be compressible. Preferably they are electrically insulating, compressible gaskets. Stacks need to be assembled and compressed to ensure good gas tightness and electrical contact in the region of the active chemistry layers. The use of compressible seals around the ports assists with gas tightness in those regions of the stack without using undue compression on the stack that would damage the active chemistry layers.

The seals may be electrically insulating. In the vicinity of the ports, an electrically insulating seal can be used to prevent a short circuit between metal surfaces of adjacent fuel surfaces that are not meant to touch. However, this could alternatively be achieved by coating at least one of the metal surfaces with an insulating layer or coating such as by extending the electrolyte layer of the cell to cover the regions around the ports.

In some embodiments the internal components of the fuel cell stack will only comprise the repeating fuel cell units and the seals overlying the shaped port features around the fluid port. By pressing the shaped port features, they define concave pores on the outer surface of the plate in which they are formed, which are covered by the seals, the pores optionally being located in a raised portion of the plate.

Each of the raised members may have a peak that defines a hard stop surface as specified above, wherein the at least one seal that sits on a seal receiving surface of a lower one of the fuel cell units has a height above that seal receiving surface before the next fuel cell unit is stacked thereon, and the hard stop surface of the lower one of the fuel cell units has a height that is located above that seal receiving surface but below the height of the seal that sits on the seal receiving surface so as to provide a limit to compression between the adjacent fuel cell units. Using such a hard stop surface with a seal can maintain a constant distance between adjacent fuel cell units, mitigating against irregular or excessive compression of an in situ seal or a gasket over time.

In the case of a stacking arrangement whereby a fuel cell unit and gasket are alternately stacked upon one another to form a single repeat unit of the stack, the provision of hard stop surfaces having a depth less than that of the uncompressed gasket (e.g. 75-95% thereof) can be important in simplifying stack assembly and improving uniformity of final stack height. In the method of assembly, the stack may be compressed during assembly until the gaskets are compressed such that the hard stop surfaces bear against the surfaces of an adjacent fuel cell unit and the desired constant distance or spacing is achieved and load transmitted through the hard stop structures.

In another fuel cell stack variant wherein again the or each raised member has a peak that defines a hard stop surface as specified above, the at least one seal may bear against an upper seal receiving surface of an upper one of the fuel cell units and the seal have a height above a second, lower, seal receiving surface of a lower one of the fuel cell units before the upper one of the fuel cell units is stacked onto the lower one of the fuel cell units, and the hard stop surface of the upper one of the fuel cell units has a height, extending below the upper seal receiving surface that is shorter than the height of the seal that sits on the lower seal receiving surface, so as to provide a limit to compression between the adjacent fuel cell units.

In some embodiments, at least one of the seals is positioned partially in a groove that surrounds a respective fluid port for that seal, the groove being optionally located in a raised portion of the plate. The groove preferably extends down and into the space between the metal support plate and the separator plate of that fuel cell unit and has a depth not exceeding 50% of the distance between the metal support plate and the separator plate of that fuel cell unit.

The metal supported solid oxide fuel cell unit, or stack, defined above may be arranged for generating heat and electricity from supplied fuel and an oxidant such as air, i.e. a generative SOFC. Alternatively it might be arranged for regenerative purposes, such as for regenerative production of hydrogen from water, or of carbon monoxide and oxygen from carbon dioxide, i.e. a regenerative SOEC.

The present invention also provides a method of manufacturing a fuel cell unit, the method comprising the steps of:
providing a separator plate;
providing a metal support plate; and
processing at least one of the metal support plate and the separator plate to form:
   flanged perimeter features;
   at least one fluid port within the separator plate and the metal support plate; and
   shaped port features formed around at least one of the at least one fluid ports,
the processing comprising at least pressing of the plate or plates to form the flanged perimeter features to form a concave configuration in the plate or plates, and likewise pressing the shaped port features;
the method further comprising:
overlying the separator plate and the metal support plate over one another to form a repeat unit;
directly joining the separator plate and the metal support plate at the flanged perimeter features, wherein the flanged perimeter features that form the concave configuration form a fluid volume therebetween, wherein the shaped port features extend towards the other plate, and elements of the shaped port features are spaced apart from one another to provide fluid pathways from the port to the fluid volume, and optionally, wherein the fluid ports are cut before the pressing of the plate or plates.

A compression step may be undertaken to compress the adjacent fuel cell units into contact with one another.

Where the seals are (preformed) gaskets, the method may comprise locating them using only raised members where those are provided and designed to accommodate and locate such gaskets. Where hard stop surfaces are provided the method may involve compressing the stack until the hard stop surfaces makes contact against surfaces of an adjacent fuel cell unit.

The metal support plate will usually be pressed before the fuel cell chemistry supporting electrochemically active layer component is coated thereon.

The fuel cell unit or stack can be as previously described.

The present invention also provides a method of manufacturing a fuel cell stack with such fuel cell units comprising stacking such fuel cell units with seals, such as, for example, gaskets, therebetween overlying the shaped port features around the fluid ports between adjacent fuel cell units.

For the avoidance of any doubt, by pressing the plates to form the flanged perimeter features, the shaped port features and the in and out projections, there is no etching of the plate to remove material from the sheet, and likewise there is no shaped port features deposited or printed on the surfaces to form integral features on the sheets having substantially different thicknesses.

In the disclosed embodiment, the porous region is provided by drilling (laser drilling) through the respective sheet of metal e.g. a stainless steel (ferritic) foil. However, porosity to allow fluid access to the active cell (e.g. fuel cell) chemistry may be provided in any suitable manner as known in the art.

These and other features of the present invention will now be described in further detail, by way of various embodiments, and just by way of example, with reference to the accompanying drawings (which drawings are not to scale, and in which the height dimensions are generally exaggerated for clarity), in which:
Figure 1 shows a plan view of a metal-supported fuel cell unit comprising a first embodiment;
Figure 2 shows a first perspective view of the fuel cell of figure 1, with two gaskets positioned below it;
Figure 3 is a second perspective view of the arrangement in figure 2, shown from a different angle;
Figure 4 is an opposite plan view from figure 1 of the fuel cell unit with the gaskets shown located over fluid ports of the fuel cell unit;
Figure 5 shows a section through the fuel cell unit;
Figure 6 shows a section through the fuel cell unit, and the gaskets, as they would be during compression of a stack of fuel cell units during assembly thereof;
Figure 7 shows an exploded perspective view of a stack of two fuel cell units, each fuel cell unit being provided with two gaskets underneath them;
Figure 8 shows the stack of figure 7, but not exploded, with the two cell units stacked over each other with the first pair of gaskets in-between them, and the two further gaskets positioned below the stack for stacking onto a further fuel cell unit (not shown);
Figure 9 shows, in plan view, an alternative fuel cell unit, comprising a second embodiment. It is similar to the first fuel cell unit but has flanged perimeter features added to the visible part of the metal support plate of the fuel cell unit, around its fluid ports, rather than just around fluid ports on the separator plate of the fuel cell unit;
Figure 10 is a perspective view of the fuel cell unit with two gaskets positioned below it, one for each fluid port;
Figure 11 is a second perspective view of the arrangement of figure 10;
Figure 12 is a bottom plan view of the arrangement in figures 11 and 10;
Figures 13 and 14 are sections through the assembled fuel cell units, with gaskets where applicable, with Figure 14 showing force indicators to show the compression during stacking, as per Figure 6;
Figures 15 to 17 show stacking of the second embodiment, which is similar to that of the first embodiment, albeit with the different shaped port features' arrangement;
Figures 18 to 26 show a third embodiment, similar to the first embodiment, but wherein the fuel cell unit has a separate part for the active fuel cell component - which has the electrochemically active layers therein, the metal support plate of the fuel cell unit being provided with a window. Otherwise, the arrangement in these figures is similar to that of the first embodiment;
Figures 27 to 35 are similar to that of figures 18 to 26 but instead show a fourth embodiment which has shaped port features in the metal support plate as well as the separator plate, much like the second embodiment;
Figure 36 shows a fifth embodiment of the present invention in which the outer shape of the fuel cell unit has been changed to provide two fluid ports at each end of the fuel cell, rather than the single one as in the first embodiment;
Figure 37 shows in more detail a corner of the product of Figure 36, in which the shaped port features are more clearly visible;
Figure 38 shows a sixth embodiment of the present invention in which the fifth embodiment is adapted to include a pair of windows in its metal support plate to align with two separate electrochemically active fuel cell components;
Figure 39 shows an alternative arrangement for the fuel cell unit wherein the separator plate of the fuel cell unit has a returning flanged perimeter feature extending back from the flanged perimeter feature to put the edge of the separator plate back in plane with the majority of the separator plate, such that the flanged perimeter feature for forming a fluid volume in the fuel cell is a ridge; the corners of the cell unit are also rounded off;
Figure 40 shows a full stack of fuel cell units clamped together, with power take-offs for enabling use of the fuel cell as an electrical supply for a load (L);
Figure 41 shows a perspective view of a stack of cell units before compression into a fuel cell stack;
Figure 42 shows an exploded view of a prior art fuel cell unit, from WO2015/136295, comprising a metal support plate and a separator plate, much like the present invention, but additionally comprising a spacer plate;
Figures 43 and 44 show a variant to that of Figure 37, with Figure 43 being a partial view in plan and Figure 44 being a partial view in perspective, both showing a corner of a product with a gasket for overlying shaped port features around a fluid port;
Figures 45 and 46 show the variant of Figures 43 and 44 in section, Figure 46 being an enlarged view of part A of Figure 45;
Figures 47 to 50 show similar views of another variant, again with a gasket and shaped port features around a fluid port, with added hard stop features; and
Figures 51 to 54 show similar views of yet another variant, again with shaped port features around a fluid port, but using an insitu seal, rather than a conventional washertype gasket.

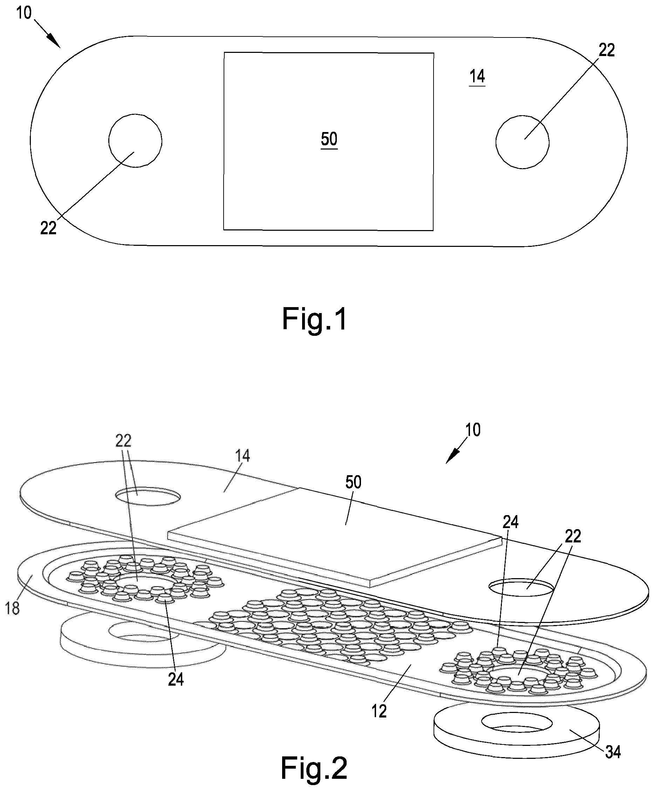

Referring first to figure 2, there is shown an exploded view of a fuel cell unit of a first embodiment of the present invention, and two gaskets. This fuel cell unit 10 is oriented upside down relative to that of the prior art fuel cell unit shown in figure 42 as it is the inside of the fuel cell unit 10 that is of primary interest for the present invention. As can be seen, the fuel cell unit 10 comprises a flat (i.e. planar) metal support plate 14 stacked next to a separator plate 12 - in this case above it. The separator plate 12 is shown to have flanged perimeter features 18 around its perimeter. This serves to render redundant the spacer plate 152 of the prior art, and is an important element of the present invention.

The flanged perimeter features 18 extend out of the predominant plane of the sheet, as found at a central fluid volume area, to create a concavity in the separator plate (and a convexity to the outside surface). The concavity will form the fluid volume 20 within this fuel cell unit upon assembly of the fuel cell unit.

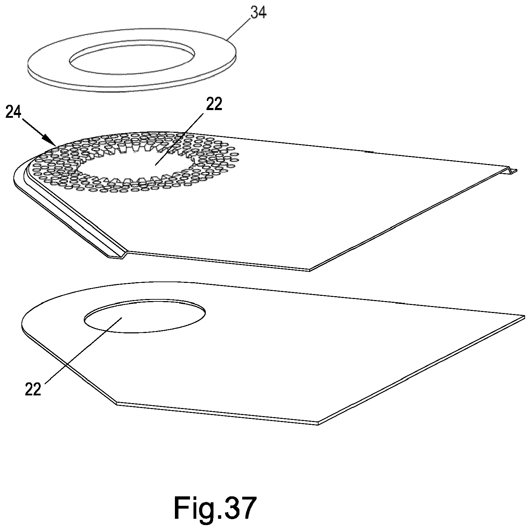

In this illustrated arrangement (simplified to illustrate key features of the invention), the fuel cell unit 10 has rounded ends and parallel sides, with a fluid port 22 towards each end. Other shapes and sizes and numbers of the respective cell features are of course possible - see Figure 37 for example - depending upon the required power and dimensions of the final stack assembly.

In a middle portion of the fuel cell unit 10, an electrochemically active layer 50 is provided on the metal support plate. In this embodiment it is located outside of the fluid volume 20.

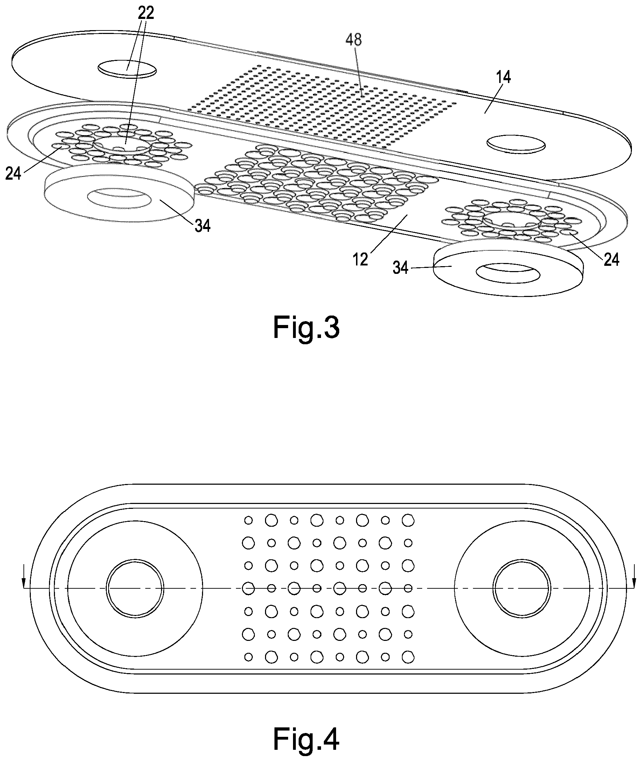

As shown in figure 3, the metal support plate 14 (e.g. metal foil) is provided with multiple small holes 48 to enable fluid in the fluid volume to be in contact with the side of the electrochemical layers that is closest to the metal support plate 14. These form a porous region bounded by a non-porous region. In a preferred embodiment, the anode (fuel electrode) layer is located adjacent the small holes with the (enclosed) fluid volume 20 within the fuel cell unit comprising a fuel flow volume 20 supplied by fuel entering and exiting via the fluid ports 22, which are thus fuel ports 22. The cathode (air electrode) layer is on the opposite side of electrochemically active layer 50, i.e. on its outer face, and is exposed to air flowing across that layer during use of the fuel cell unit 10.

Both the separator plate 12 and the metal support plate 14 are provided with fluid ports 22. In this embodiment, around the fluid ports of the separator plate 12, shaped port features 24 are provided. In this embodiment, the shaped port features 24 are provided as multiple elements in the form of round dimples extending out of the plane of the base of the fluid volume 20 a distance corresponding to that of the height of the flanged perimeter features 18 - to have a common height therewith. This is so that they will contact the opposing surface of the metal support plate 14, just like the flanged perimeter features 18, when the cell unit 10 is assembled. As a result, when the flanged perimeter features 18 are joined to the metal support plate 14, for example by welding, the shaped port features 24 will likewise contact the metal support plate 14.

This is important as the shaped port features 24 also provide part of the function of the spacer plate 152 that was provided in the prior art - supporting the fuel cell unit during compression together of multiple fuel cell units in a stack during assembly of the stack. They thus help to preserve the height of the fluid volume inside the fuel cell unit during that compression.

The multiple elements in this embodiment are round in section, and are substantially frusto-conical in form in that they have non-perpendicular side walls and a truncated flat top. They are pressed into the plate of the separator plate 12. Such angled walls are a preferred arrangement as an angle is easier to achieve when pressing them out of the plate from which the separator plate 12 is formed than a perpendicular wall. However, any angle from perhaps 20 to 90 degrees can provide a useable form. Preferably it is between 40 and 90 degrees from the plane of the sheet from which it is pressed.

Usually the elements are pressed in the same step as the rest of the separator plate - i.e. the flanged perimeter features and central up projections, and downward or down projections, as discussed below.

The pressing may be any suitable method for forming a sheet into a suitable configuration, such as, for example, hydroforming or stamping/pressing. A single thin sheet can thus be used to form this part of the fuel cell unit.

Compressive forces in the stack in the vicinity of the electrochemically active layer are required for good electrical contact and hence good conductivity through the stack. Central projections 32 and central downward projections 30 create the required electrical contacts between cell units and also provide a support function for the fuel cell unit in the central region, extending upwardly to the underside of the metal support plate 14 at the area of the small holes 48, and downwardly to the opposing surface of the electrochemically active layer of a cell below it.

In this embodiment, the projections in the central region of the separator plate 12 are again circular and will typically have angled side walls as well. As per the prior art, however, they can have different shapes such as the bars of the prior art. They may have angled sidewalls like those of the shaped port regions, i.e. usually within the range 20 to 90 degrees, or more preferably between 40 and 90 degrees.

A function of these central projections and downward projections, however, is also to create respective fluid passageways, namely, fuel volume passageways and oxidant (e.g. air) volume passageways, on either side of the separator plate 12. In this case, inside the fuel cell unit, the projections create winding (e.g. tortuous) fluid passageways within the fluid volume so that fluid can pass from one fluid port 22 at one end of the fuel cell unit 10, across the active layer 50, to a fluid port 22 at the other end of the fuel cell unit 10.

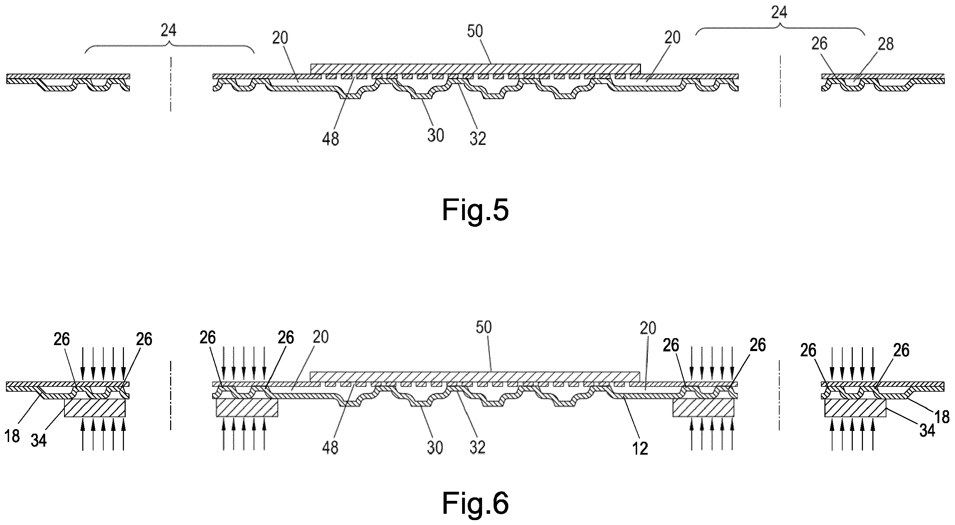

That internal flow path also extends between the elements 26 of the shaped port features 24, as the elements also provide fluid passageways 28 - see figure 5.

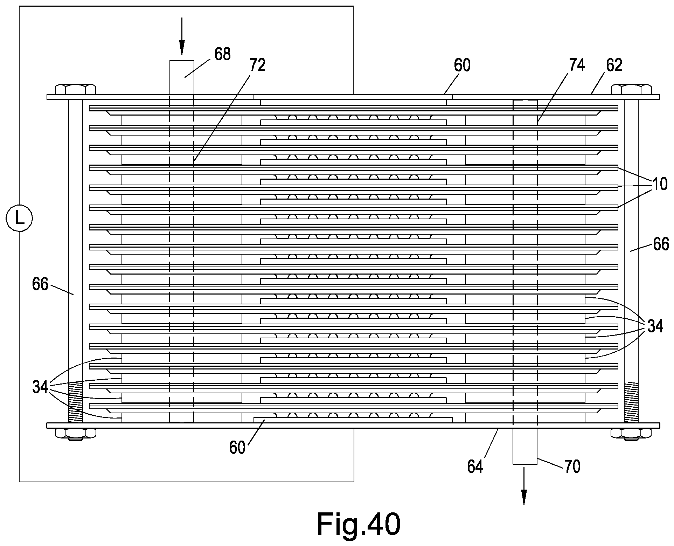

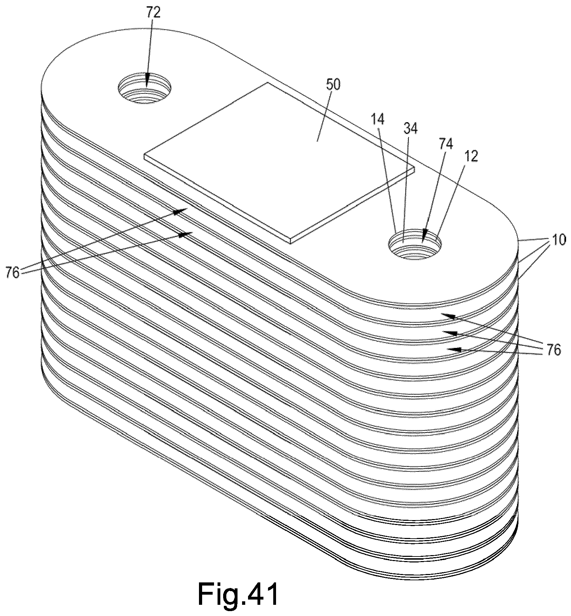

Seals in the form of gaskets 34 are also provided in this embodiment for the fuel cell stack between the adjacent fuel cell units 10. Examples are provided in figures 2 and 3. The seals - here gaskets 34 - provide a primary sealing function and will usually be compressible gaskets that are subjected to high compressive forces in the vicinity of the ports. The gaskets may be sized to cover all the shaped port features 24 of each fluid port 22 to prevent fluid that may be travelling through the fluid ports 22 in a stack from seeping between the outside of the fuel cell unit 10 and the gasket 34, into the area external of the cell units, i.e. into the fluid surrounding the fuel cell units 10, or fluid external of the fluid ports from seeping in the other direction - into the fluid ports. This is important to prevent any mixing of the fluid inside the cell unit 10 and the fluid outside the cell unit 10, which will be fuel and oxidant - the polarity of the electrochemically active layers 50 determining which way round this will be. As explained above, commonly it is fuel inside the fluid volume 20 in the fuel cell units 10, and thus in chimneys 72, 74 (see Figures 40 and 41) formed by the fluid ports and gaskets (which are ring-gaskets), and air or another oxidant surrounding the fuel cell units.

The gaskets may also provide electrical insulation between a first fuel cell unit 10 and an adjacent fluid cell unit 10, so as to prevent a short circuit. The gaskets may be any suitable fuel cell gaskets (sealing rings), such as, for example, thermiculite.

Referring to figures 5 and 6, it can be seen how the flanged perimeter features 18, the central projections, up and down, 32, 30, and the shaped port features 24 extend out of the initial plane of the metal sheet used to form the separator plate 12 and how the gaskets 34 are diametrically sized to cover the area of the shaped port features 24 that are pressed upward out of the underside of the separator plate 12 - i.e. away from the gasket 34 to leave pores. With this arrangement, when compression is provided through the cell unit 10 in the assembled stack of cell units, the shaped port features 24, along with the flanged perimeter features 18 and the central projections 30, 32, support against crushing of the fluid volume.

In the prior art, the support function of the shaped port features 24, along with the flanged perimeter features 18, was instead done by the spacer 152. In particular, the spacer ensured that the high load from the gasket compression in the vicinity of the ports was transferred to the next fuel cell unit.

Further, the creation of the internal fluid volume 20 is achieved by the flanged perimeter features 18 - a feature previously provided by the spacer plate 152. However, the footprint of the original component from which the spacer was cut was large, resulting in wasted material.

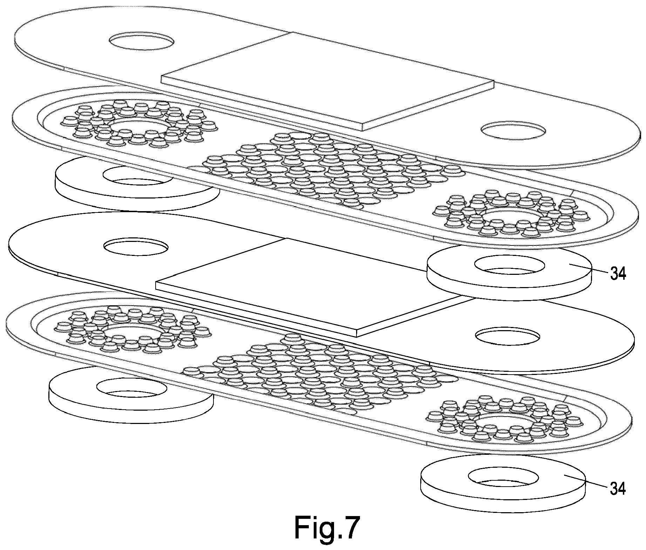

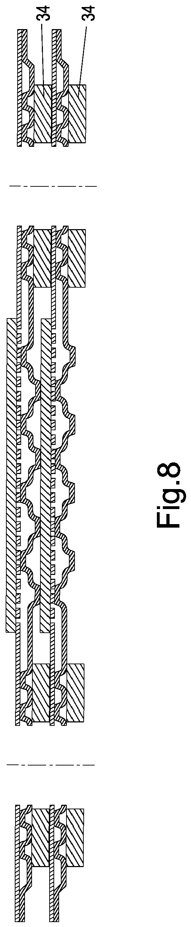

Referring to figures 4, 5 and 6, it can also be seen that the central upward projections 32 alternate with the central downward projections 30 in the separator plate 12. This is to allow the downward projections 30 to extend downwardly to the adjacent fuel cell's upper electrochemically active layer 50, below it. This is shown more clearly in figures 7 and 8, where it can be seen that the central upward projections 32 extend upwardly to the underside of the metal support plate 14 of its own fuel cell unit 10, whereas the downward projections 30 contact the outer side of the electrochemically active layer 50 of the fuel cell unit 10 below it. This thus ensures that the adjacent fuel cell units 10 connect together like batteries in series in each stack. It also serves a beneficial function of expanding the height of the fluid volume passageways in the fluid volume.

Referring next to figure 8 it can be seen that adjacent fuel cell units 10 preferably have separator plates with matched opposed projections relative to one another such that the upward projections 32 on one fuel cell unit 10 align with downward projections 30 on the neighbouring fuel cell unit 10, and downward projections 30 are aligned with upward projections 32. This allows the forces of the respective projections to counter each other axially (i.e. parallel to the compression force applied to the stack during assembly). This avoids, or minimises, imparting torsional force to the electrochemically active layer 50 between the projections, thus preventing inadvertent cracking of the electrochemically active layers.

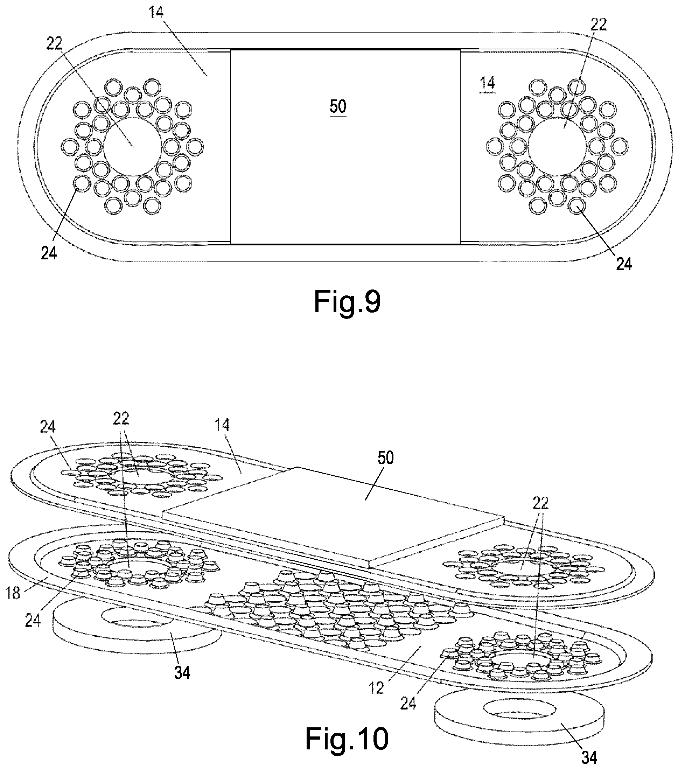

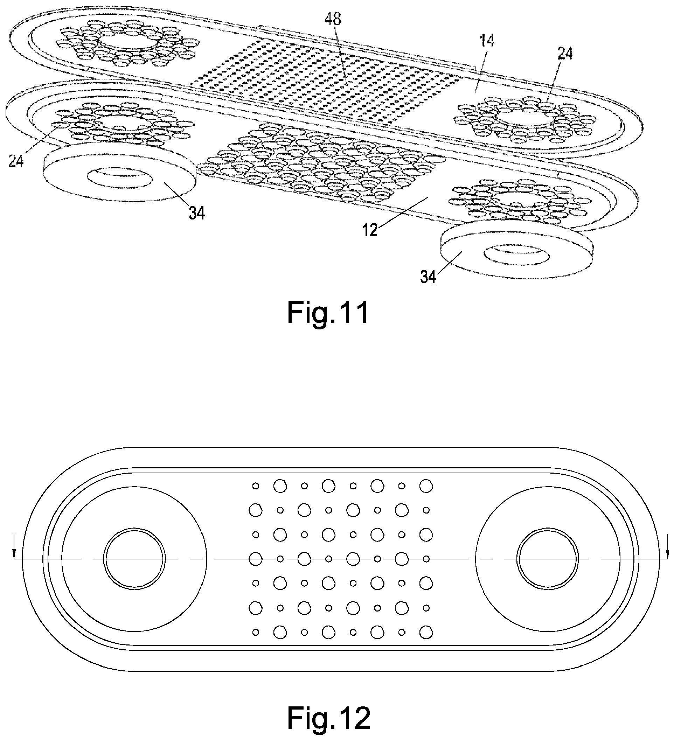

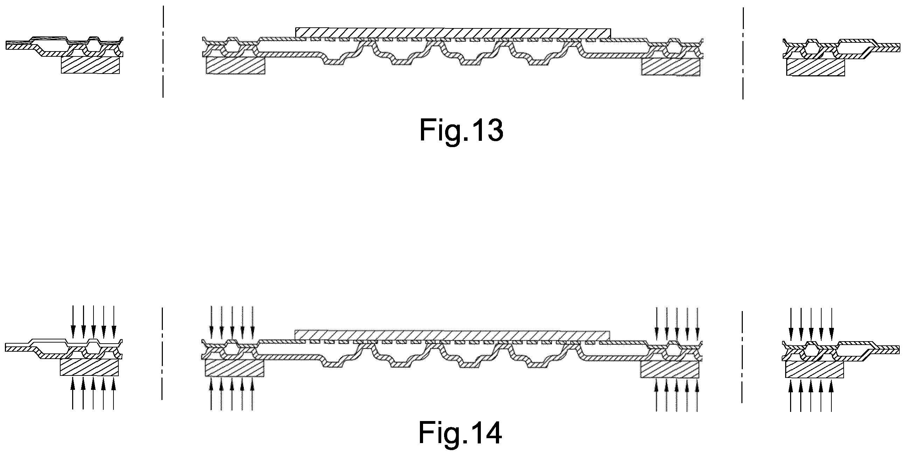

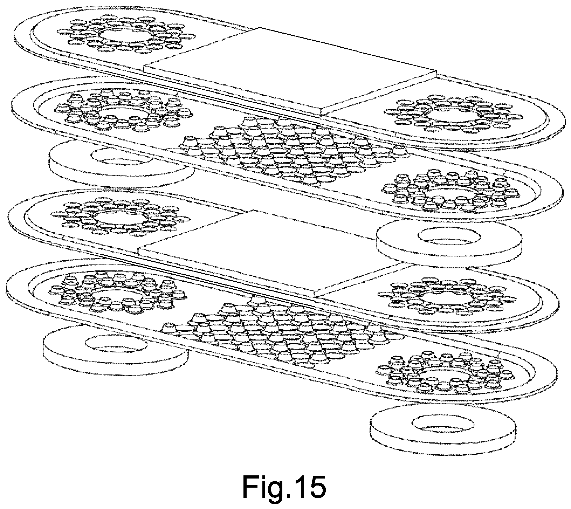

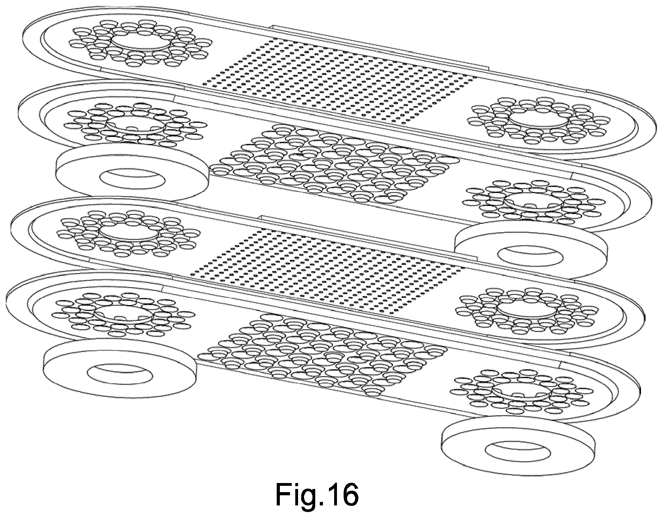

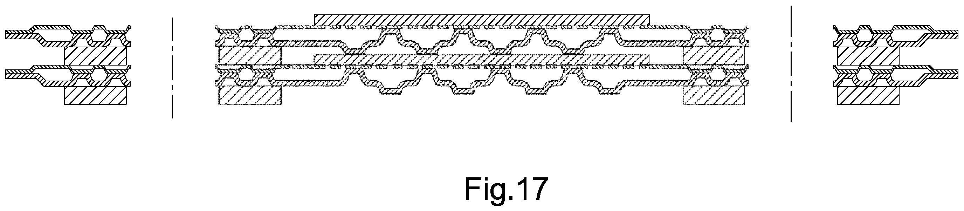

Referring next to figures 9 to 17, a second embodiment of the present invention is disclosed. In this embodiment, there is still a separator plate 12 and a metal support plate 14, similar to that of the first embodiment, but the shaped port features 24 are now positioned around the fluid port 22 of both the metal support plate 14 and the separator plate 12. As such, the height of the elements in the separator plate 12 are less high than in the previous embodiment, and separate, aligned, shaped port features 24 are arranged to face downwardly from the metal support plate 14, the latter being of a height suitable to create the equivalent of the full height of the first embodiment when combined with the ones of the separator plate 12. By them aligning onto one another, the volume inside the fuel cell unit 10 is again able to be maintained, at the height of the two stacked elements, while still providing the required support for the fluid volume passageways in the vicinity of the ports where compression forces in the assembled stack are particularly high. The rest of this arrangement is unchanged compared to the previous embodiment.

Usually the two heights of the elements are intended to be different to one another, but to together create the desired total height, but they can match for achieving that total desired height.

With the arrangement of the second embodiment, the shaped port features 24 in any particular component need not be quite so high, thereby being easier to achieve when pressing them out of the sheet.

It is also possible for the shaped port features 24 only to be in the metal support plate 14, or for both to have full height and for them to intermesh, albeit while still leaving fluid pathways for fluid flow in the fluid volume.

In this second embodiment, as with the previous embodiment, the shaped port features 24, and the central up and down projections 30, 32 are all dimples having a round form. They can have different shapes instead, but dimples are preferred as they provide a large passage for the fluid to flow through, and this is especially important for the shaped port features 24 as they are thus less likely to cause channels between the gasket and the opposite side of the member from which they are pressed through which the fluid in the port can leak into the surrounding volume of the cell unit 10, or vice versa.

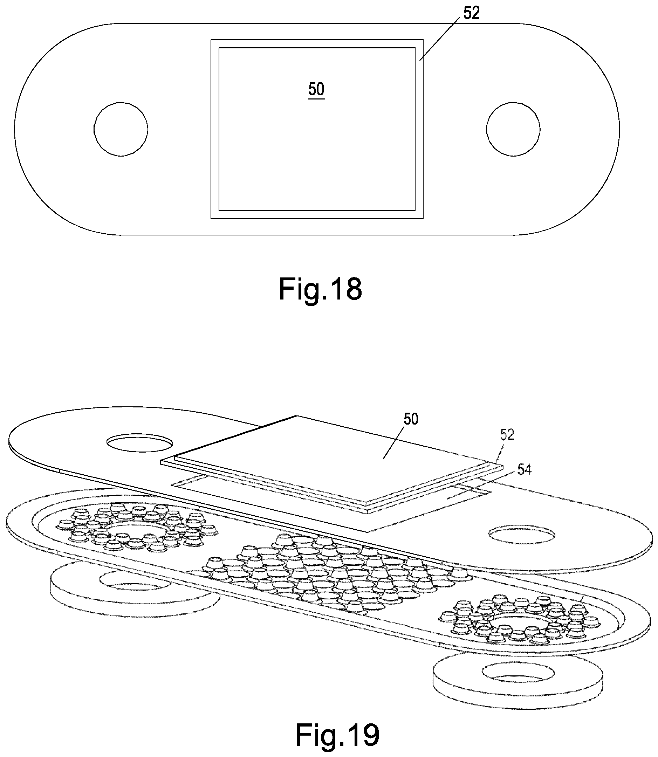

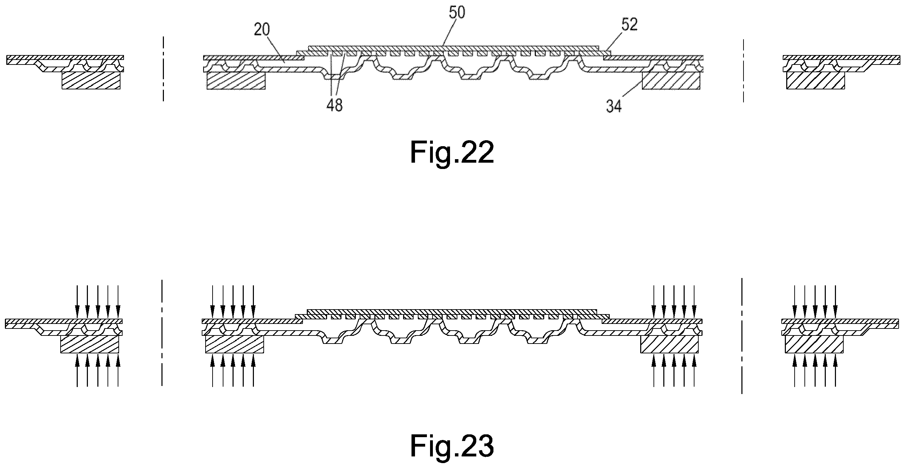

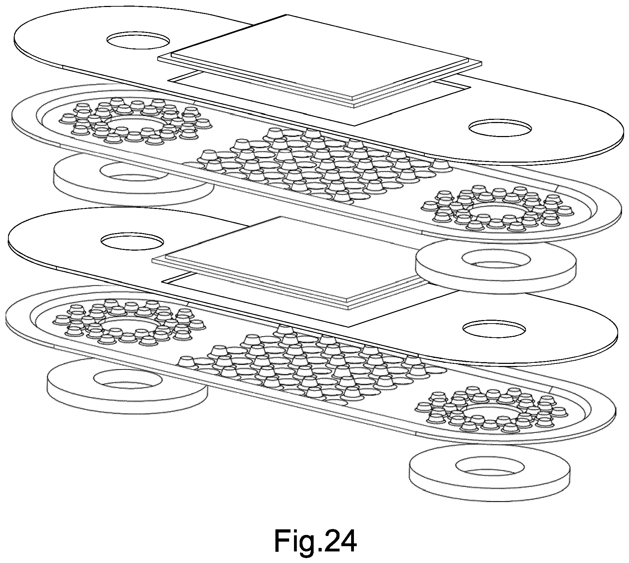

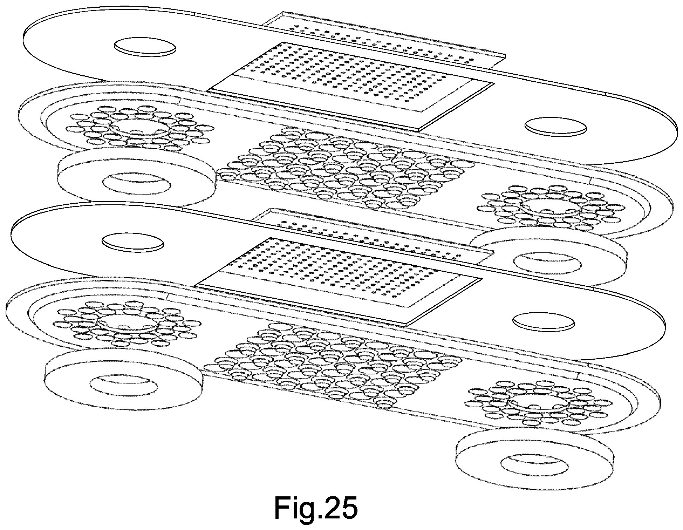

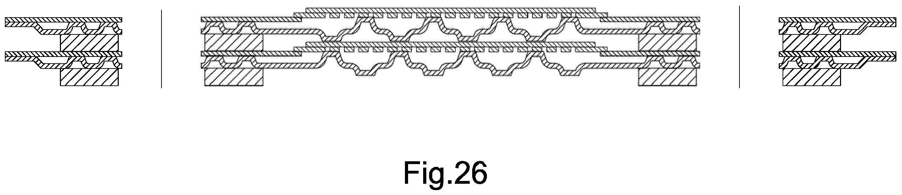

Referring next to figures 18 to 26, a third arrangement of the fuel cell unit 10 is provided. In this embodiment, similar to that of the first embodiment, the shaped port features 24 and the central projections, 30, 32 are all again provided in the separator plate 12, and thus the metal support plate 14 is instead generally flat or at least absent such projections, but whereas previously the metal support plate 14 had many small holes 48 in the central area with a directly overlying electrochemically active layer 50, in this embodiment the metal support plate 14 has a window 54 over which a separate electrochemically active layer component 52 will lie. Although formed separately, that electrochemically active layer component 52 will be joined to the metal support plate 14, for example by welding so that the metal support plate carries it.

The electrochemically active layer component 52 is provided with multiple small holes and a directly overlying electrochemically active layer 50 to enable fluid in the fluid volume 20 to contact the innermost electrochemical layer.

This embodiment still only involves adjoining two components at the perimeter flange features but does not require the fuel chemistry to be integrally formed with the metal support plate from the outset, which can be advantageous.

Laser welding is generally the preferred way in which the metal support plate 14, the separator plate 12 and the separate electrochemically active layer component 52, are joined to one another.

In this third embodiment, the window is rectangular. Other shapes are naturally possible for the window instead.

The electrochemically active layer component 52 normally has a similar shape to the window 54 to optimise the size of the electrochemically active layer 50 thereon, albeit bigger to overlap, as shown. This again avoids an excessive weight gain for the fuel cell unit 10.

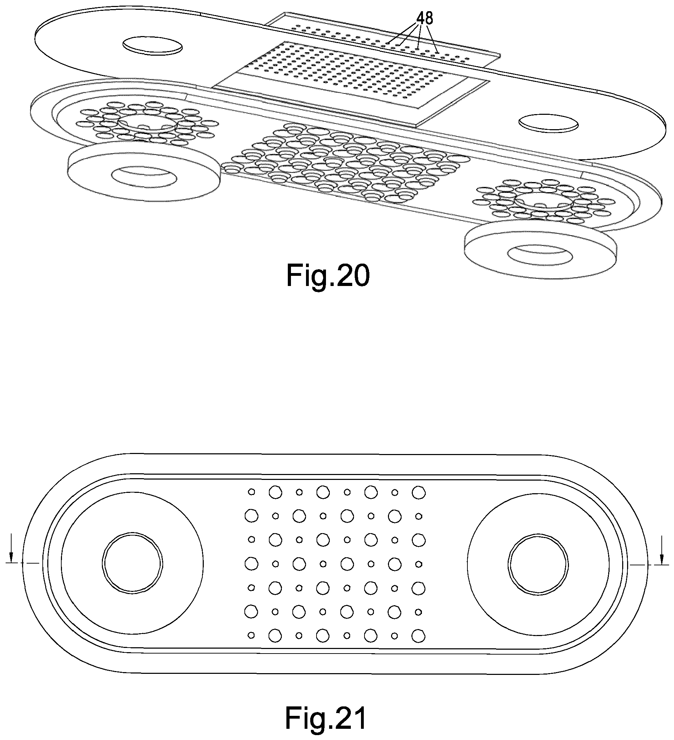

As can be seen in figure 20, the electrochemically active layer component 52 has lots of small holes 48, much like those in the metal support plate 14 of the first and second embodiments. They similarly provide access to one side of the electrochemically active layer 50 thereon. Operation of this fuel cell unit in a stack is thus similar to that of the previous embodiments, and the prior art, although in this embodiment the upward projections 32 need to be higher than in the first two embodiments as they now need also to bridge the thickness of the metal support plate 14 in order to contact the underside of the small holes 48.

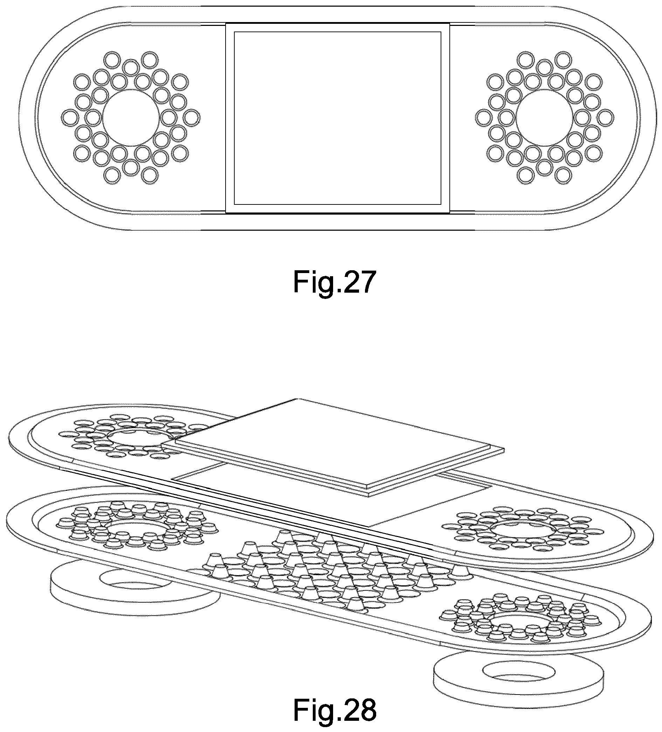

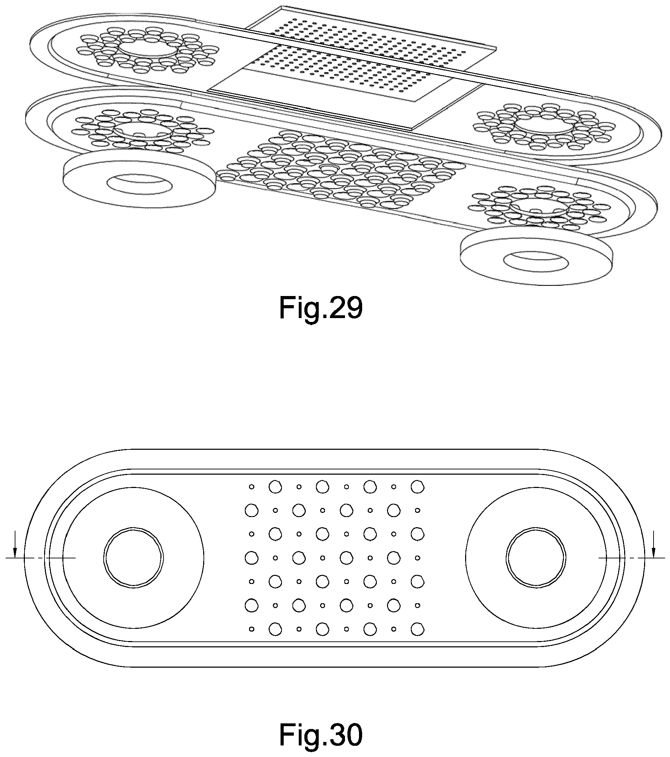

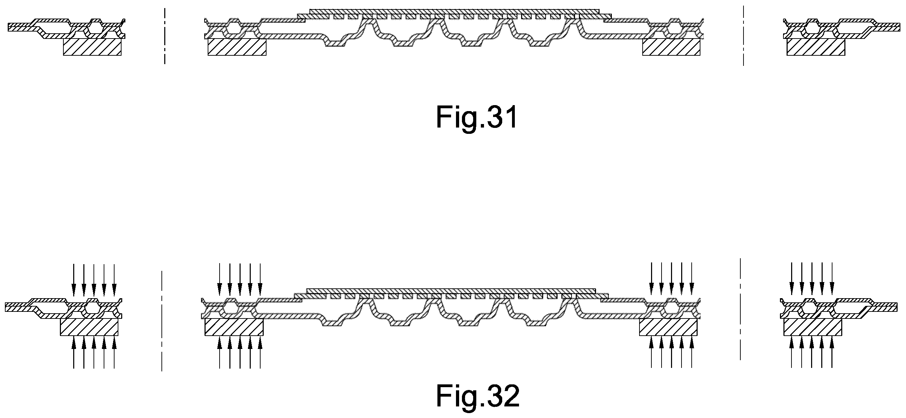

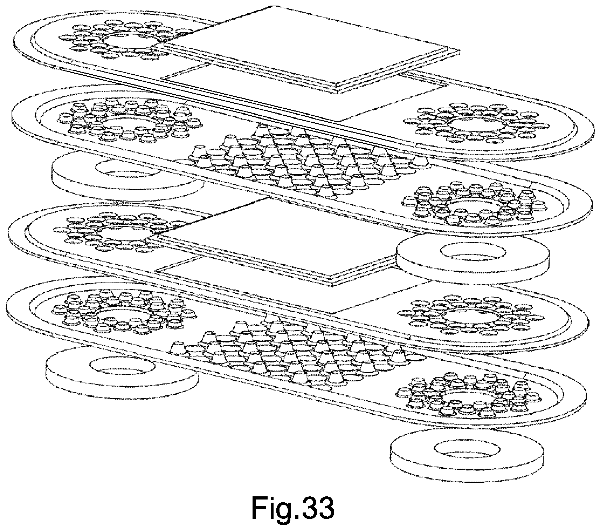

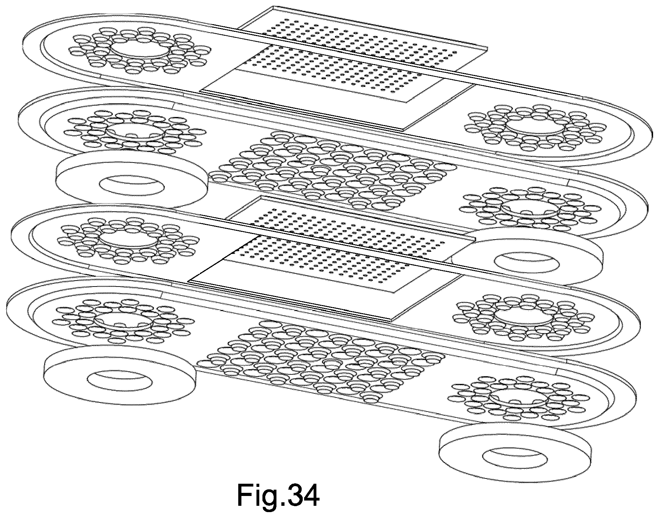

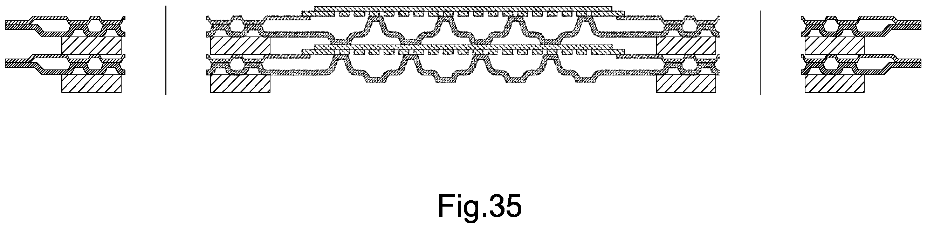

Referring then to figures 27 to 35, a fourth embodiment is shown. In this embodiment, the arrangement is similar to that of the second embodiment but it comprises the separate electrochemically active layer component 52 as per the third embodiment. Again, therefore, the upward projections 32 are taller than in the first and second embodiments. It will be appreciated that the metal support plate 14 can be pressed, and the window 54 cut, before the fuel cell chemistry supporting electrochemically active layer component 52 is attached thereto. The window can be cut before or after the pressing, or at the same time in a press with a punch. More usually it will be laser cut from the metal support plate.

In each of these four embodiments, a preferred arrangement for the elements of the shaped port features 24 is shown. As can be seen, they take the form of circular dimples. Furthermore, the circular dimples are arranged in concentric rings around the fluid port 22, with circumferential gaps between them, which gaps get larger between the dimples on the further outward rings (from the fluid port 22). This is a suitable arrangement for a circular fluid port, although different arrangements are also possible, such as a regular array, or an irregular arrangement, or different numbers or sizes of dimples, or different numbers of rings.

In these embodiments there are ten dimples in each concentric ring of dimples, and each concentric ring of dimples is rotated out of line of the preceding one such to stagger relative thereto. This can be such that every ring is differently aligned, or as shown such that the inner concentric ring and the third concentric ring are radially aligned whereas the second concentric ring is interposed to lie in a position commonly spaced between two adjacent dimples of the first concentric ring and likewise with respect to two dimples of the second concentric ring.

In this, and preferred, arrangements, tortuous, rather than linear, fluid passageways are formed from the fluid port 22 to a location outside the concentric rings (or shaped port features 24).

Having larger gaps between the elements where they lie radially more distant from the fluid port 22 is preferred, with them closer together nearer the fluid port 22. This larger "outer" gap ensures a greater freedom for the fluid to move through the fluid passageways between the dimples, but more importantly it presents a more complete surface near the edge of the gaskets onto which the gaskets 34 can provide a good seal.

The gaskets 34 may be compressed upon assembly of the stack so as to deflect into the depressions left behind by the pressed out dimples in the sheet of the separator plate 12 (or metal support plate 14). This then further creates the good seal between the fluid port chimney and the volume surrounding the fuel cell units in the stack.

The outside shape of the fuel cell unit 10 need not match that of the first to fourth embodiments. Indeed, there are many variations available to a skilled person. The present invention is intended to cover any and all of these different shapes. For example, instead of the elongated version shown herein, it may be more rectangular with the fluid ports in the corners, or it may be diamond shaped with the fluid ports at two corners, or it may be oval with the fluid ports at the longer spaced ends thereof.

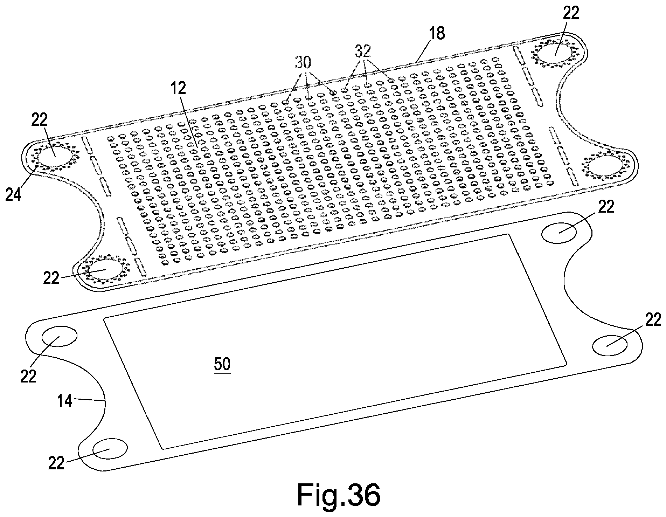

Figure 36 shows a further possible shape for the fuel cell unit 10, wherein the separator plate 12 and the metal support plate 14 are generally rectangular, albeit with cut-out regions in the short ends thereof to define two extending fingers at each end. Fluid ports 22 are provided on each of those two fingers at each end.

Some embodiments may have more fingers, or more ports.

In this fifth embodiment, a flanged perimeter feature 18 is again provided, as are shaped port features 24 in the separator plate 12. Furthermore, arrays of projections 30, 32 extend upwardly and downwardly, alternately, throughout a central region of the separator plate for the purposes previously disclosed with respect to the previous four embodiments. There is furthermore an electrochemically active layer 50 incorporated onto the metal support plate 14. By having two fluid ports 22 at each end, fluid flow within the fluid volume within the SOEC or SOFC fuel cell unit 10 can be better directed.

Referring next to figure 37, a detail of a corner of the fuel cell unit 10 of figure 37 is shown. As can be seen, a gasket 34 for the fuel stack is also shown. It is sized to overlie over all of the shaped port features 24, which in this embodiment comprise dimples surrounding the fluid ports 22. The dimples can be a number of concentric rings, such as four concentric rings of staggered circular dimples.

Other arrangements for the shaped port features 24, such as that of the first to fourth embodiments could instead be provided.

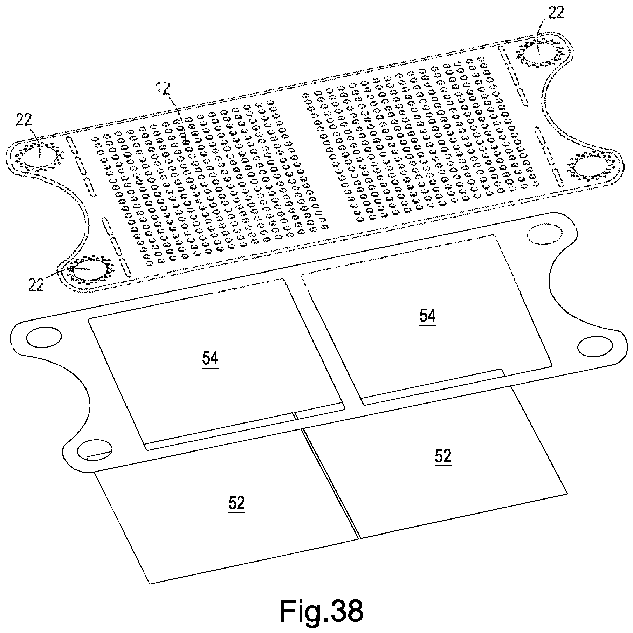

Referring next to figure 38, a modified version of the product of figure 36 is shown, in which two windows are provided, which windows 54 are arranged end to end for receiving two separate electrochemically active layer components 52.

Other embodiments might have more than two windows and electrochemically active layer components.

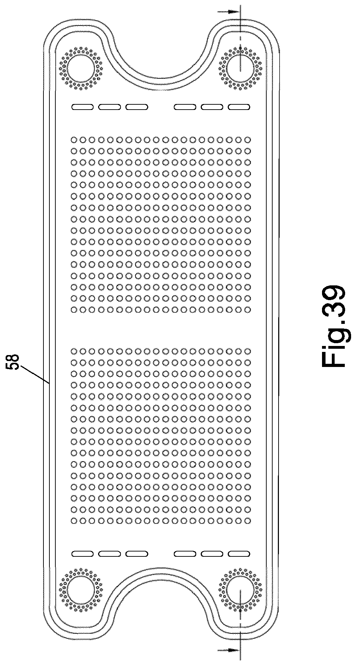

Referring next to figure 39, there is shown a further modification of the fuel cell unit 10 of the present invention in which the pressed flanged perimeter features 18 are located inward of an edge of the fuel cell unit 10 so as to be an upward projection, or ridge, relative to the edges and middle of the separator plate 12, or the metal support plate 14 if instead provided on that, or on both.

Referring next to figure 40, a fuel cell stack is shown comprising multiple fuel cell units 10. As can be seen it has a top compression plate 62 and a bottom compression plate 64 connected together by bolts 66 to allow the cell units 10 to be compressed together, thus ensuring electrical connectivity between the central projections and the porous regions/electrochemically active layers, and thus complete use of each electrochemically active area. Further it shows an entry position 68 and an exit position 70 for the air or fuel fluid to be passed down into a first chimney 72 formed by a first set of gaskets 34 and a column of all the first of the fluid ports and then down out of a second chimney 74 formed by a second set of gaskets 34 and a column of all the second of the fluid ports. It will be understood, however, that the fluid entry and exit may be otherwise arranged relative to the chimneys 72, 74, e.g. both at the top or the bottom, or the fuel cell stack may be mounted on its side (or at an angle).

Figure 40 also shows a contact pad 60 at the top and bottom of the stack which illustrate possible positions for connecting the stack to a power demand, - such as the illustrated load L.

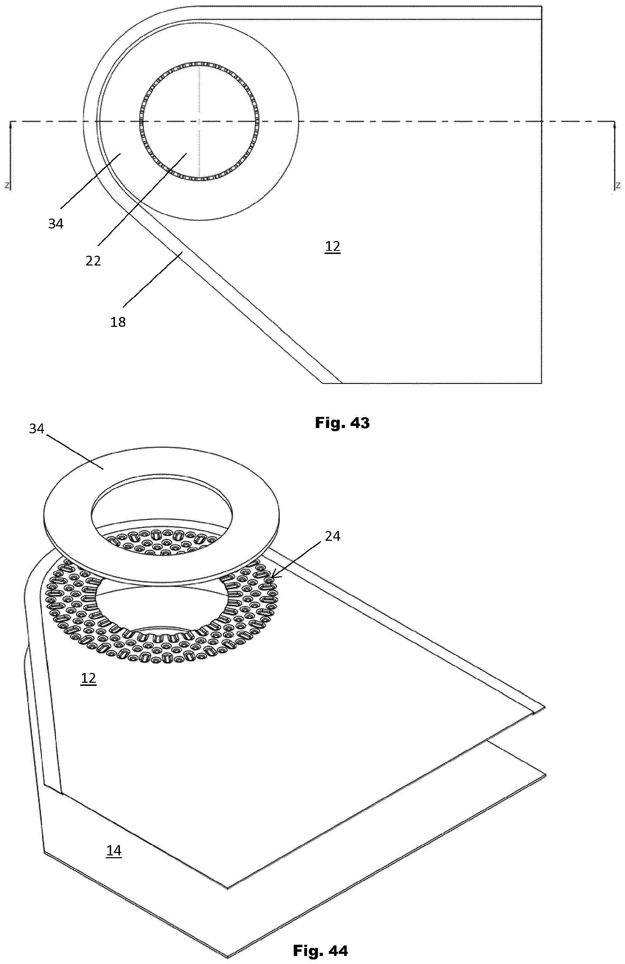

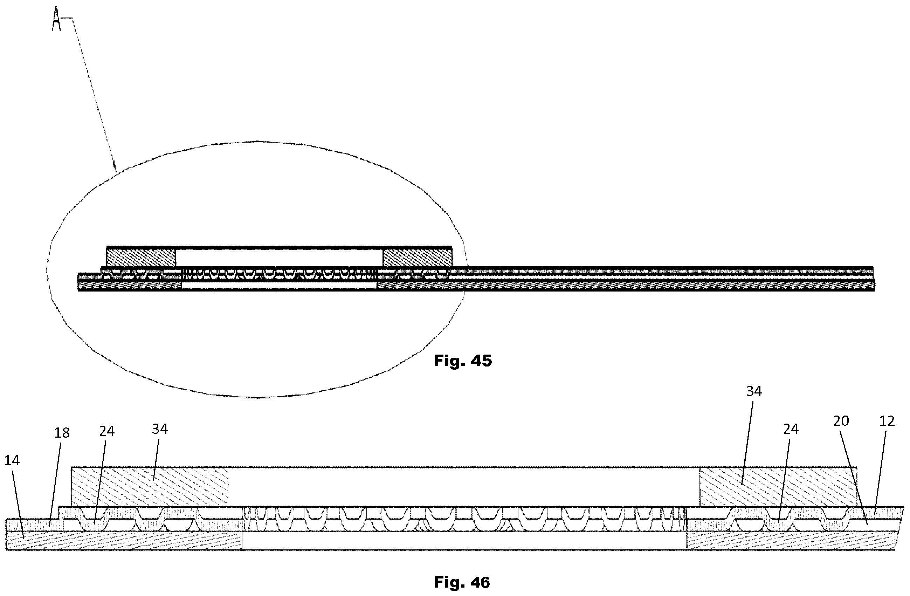

Referring next to Figures 43 to 46, a variant corner arrangement is shown. As with the embodiment in figure 37, there is a fluid port 22 surrounded by shaped port features 24 and a gasket 34 provided for covering over the recesses formed by the shaped port features 24 during assembly, as can be seen in figure 43. The gasket 34 is shown in that figure to have an outside diameter that covers to the outer edges at least of the shaped port features 24, but an inner diameter larger than the fluid port 22. Although optional, this prevents the inner diameter of the gasket 34 occluding the chimney formed by the stack of fluid ports in the final fuel cell stack in the event that the gasket is slightly misaligned relative to the centre of the chimney.

The shaped port features 24 extend down to contact metal support plate 14, their lowermost surfaces lying in a first plane, the same plane as the flanged perimeter features 18, whereas their uppermost surfaces and the remainder of the separator plate 12 lie in a second plane spaced from the metal support plate 14 so as to define the fluid volume 20.

In this embodiment, the shaped port features 24 have grooves at the innermost area, which grooves are open to the fluid port 22. There are then two staggered rings of circular recesses, followed by a final ring of alternating grooves and circular recesses, which grooves have a length of approximately twice the diameter of the circular recesses. In this embodiment, the grooves radially align with the circular recesses of the inner of the two staggered rings, and are staggered relative to the grooves at the innermost area. The circular recesses of that final ring instead radially align with the circular recesses of the second of the two staggered rings of circular recesses. This arrangement creates passageways for allowing fluid to flow between the recesses in the inside of the fuel cell unit (from the fluid port into the inside of the fuel cell unit, or in the opposite direction, if venting).

Although this embodiment is shown in respect of a corner of a fuel cell unit, whereby it could replace the corner arrangements of the fuel cell units shown in figures 36, 38 or 39, this arrangement of grooves and recesses could equally be applied to other fuel cell unit designs, including those with single fluid ports at each end, such as that of Figure 1.

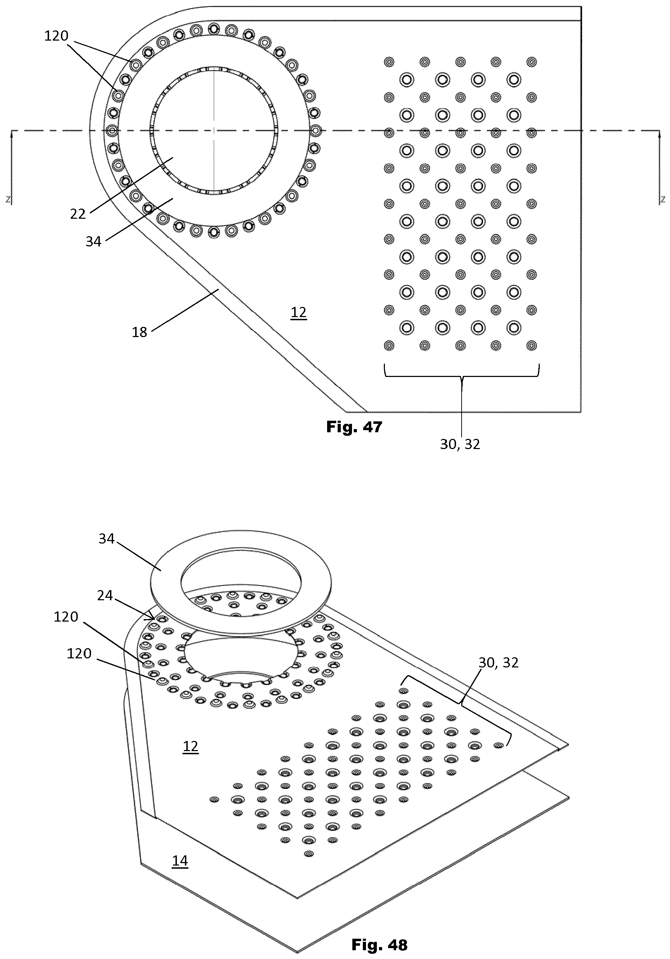

Referring next to figures 47 to 50, a further variant for the corner of the fuel cell is shown, although again this may be provided on different fuel cell designs, e.g. elsewhere within the shape of a fuel cell unit, be that a fuel cell unit with four fluid ports, with one in each corner (as per Figures 36, 38 and 39, or with two fluid ports, one at each end (as in the embodiment of figure 1) or any other fuel cell design, including ones with any other number of fluid ports.

In this variant, in addition to the recesses and/or grooves forming the shaped port features 24, raised members 120 are provided. These raised members 120 are located in a ring external of the outer perimeter of the gasket 34 and provide, in this embodiment, two functions:
Firstly they provide a guide for the location of the gasket as the gasket can fit internally of the ring of raised members 120, thus seating in the correct position relative to the fluid port 22, i.e. centred relative to the fluid port 22, during assembly of the fuel cell stack.

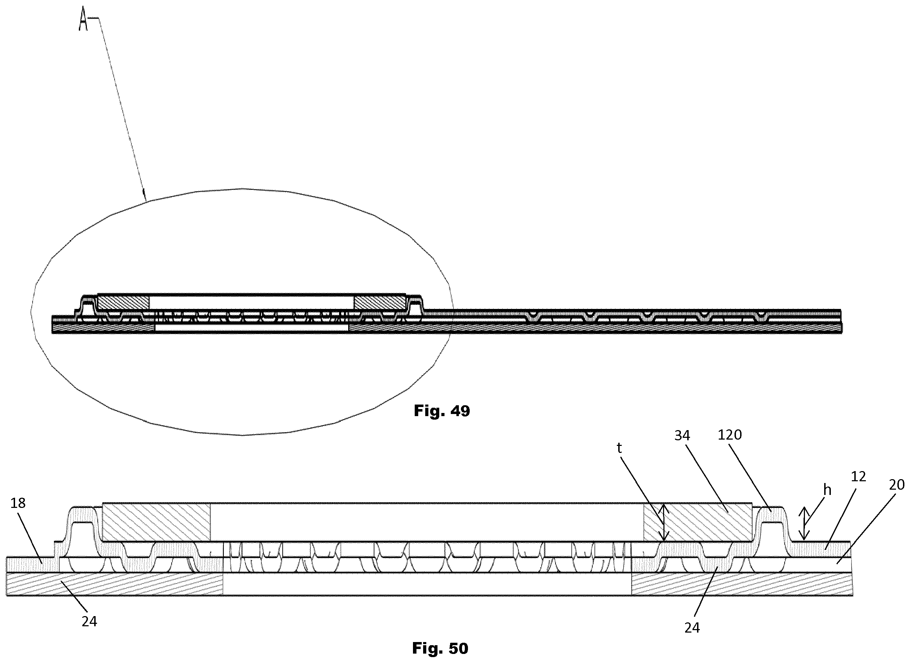

Secondly, as shown in figure 49 and 50, the raised members 120 have a height h that is less than, or preferably between 75 and 99% of, or more preferably 75 to 85% (e.g. 78-82%) of, the thickness t of the gasket 34. The ratio of height h to thickness t can be tailored to the compression requirements of the particular gasket used. Although to provide the first function such a large height h is not necessary, and thus it could instead be less tall (e.g. h could be between 5 and 75% of the thickness t of the gasket), it is preferred to be the larger height to provide the second function of providing a hard stop during assembly and stacking of the stack. This hard stop function can be helpful during manufacture of the fuel cell stack as by virtue of the gasket being compressible, to thus enable it to seal over the recesses in the outer surface of the fuel cell unit upon compression, there is a possibility of over compression of the stack during assembly, which over compression could crack or otherwise damage the electrochemically active layers on the metal support plate as the central projections 30 are also brought into contact with those electrochemical layers during that gasket compression. By having a hard stop, a limit can be set for that degree of compression, whereby over compression could be resisted by the hard stops, thus preventing inadvertent cracking of the electrochemically active layers on the metal support plate (and thus better tolerances for the engagement pressures within the fuel cell between the central projections and the electrochemically active layers).

It is important, however, for these raised members 120 not to be taller than the thickness t of the gaskets 34 as otherwise the gasket cannot be compressed during the stacking process, and similarly the electrical connection between the electrochemically active layer and the central projections could fail to be made, thus preventing the efficient operation of the stack, and introducing potential for hot-spots within it. Nevertheless, the actual height h of the raised members 120, may be varied or set at appropriate for achieving during assembly the required compression of the gasket, and thus the correct connection between the electrochemically active layer and the central projections, to ensure there is proper sealing over of the recesses in the outer surface of the fuel cell unit by the gasket and correct electrical connections across the whole set of central projections 30. An electrically insulating coating or paste layer may be used on one or both of the abutting surfaces (the hard stop surface, formed by raised members 120, and metal substrate of the adjacent fuel cell unit) of adjacent fuel cell units to prevent electrical contact between adjacent fuel cell units via the abutting surfaces.

In a variant of this, instead of the raised members surrounding the outer perimeter of the gasket 34, the gasket could have forms or holes within it to accommodate the raised members 120, thus again providing a fixed position for the gasket relative to the raised members 120, and potentially a fixed orientation for the gasket relative thereto (or fixed orientations, if the gasket can fit in more than one fixed orientation).

In a variant of this, the raised members 120 surrounding the outer perimeter of the gasket are formed on the metal support plate 14 extending towards the separator plate 12 of a neighboring fuel cell unit. In a further variant, raised members are formed on the metal support plate 14 and the separator plate 12, these raised members may be spaced from one another. Further, the raised members on the metal support plate 14 and separator plate 12 may be of an intermediate height and arranged such that their raised features abut one another to form interfacing raised members having the same total height as the case where the height of the raised members is provided by raised members on the separator plate 12 or metal support plate 14, or spaced from one another on both the separator plate 12 and metal support plate 14.

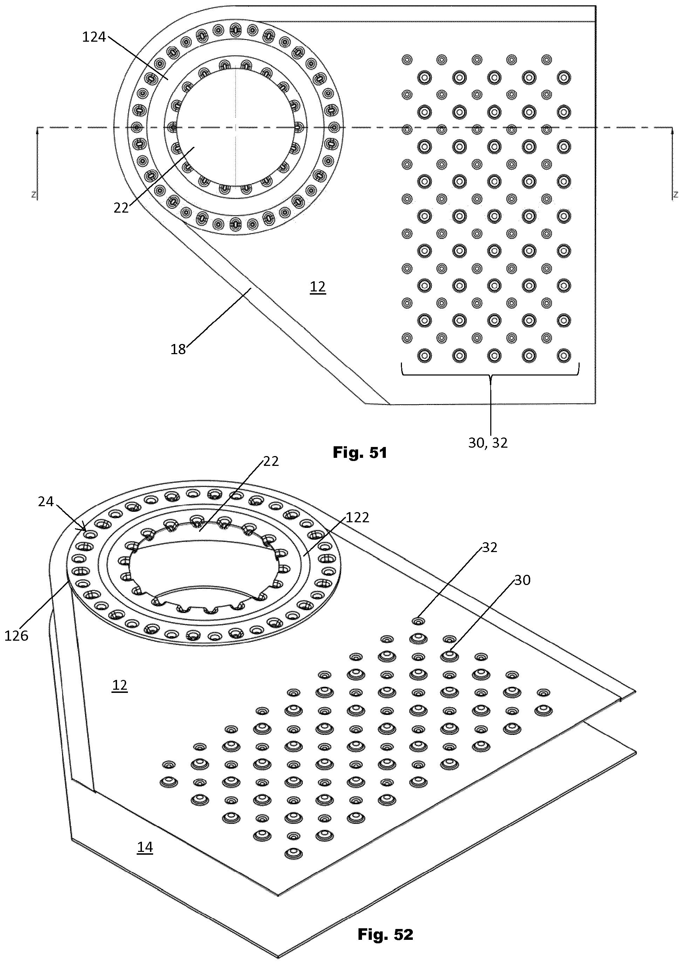

Referring next to figures 51 to 54, a further variant of the corner is shown. In this embodiment, instead of a (preformed) gasket, an annular groove 122 is provided surrounding the fluid port 22 for accommodating an insitu seal material. The groove 122 is shown in figure 52 and it is less deep than the recesses 24 of the shaped port features either side of it as it needs not to create a barrier for fluid flow from the fluid port 22 into the internal space of the fuel cell unit.

Recesses 24 are again provided, arranged in concentric rings. In this case one ring is external of the annular groove, and one ring is internal of the annular groove, the latter being in the form of grooves to the edge of the fluid port. Additional rings of recesses or grooves may also be provided as per the previous embodiments. For clarity, however, just these two rings are shown to allow the annular groove to be seen most clearly.

Although the annular groove forms a uniform circle in this embodiment, with a constant depth, it would be possible to make the groove less uniform both in radius and depth, but for simplicity a uniform radius and depth is provided.

Referring then instead to figure 51 it can be seen that the annular groove 122 is now covered by an in-situ seal, namely, a ring of sealant material 124. This material 124 may be a liquid or paste applied during assembly of the stack. It can be any conventional sealing contact paste designed when hardened to withstand the operational environment of the fuel cell. It could also be replaced with a (pre-formed) gasket if needed, but the use of an insitu seal has the significant advantage of reducing the parts count, reducing costs and simplifying assembly since the careful positioning of gaskets is no longer required.

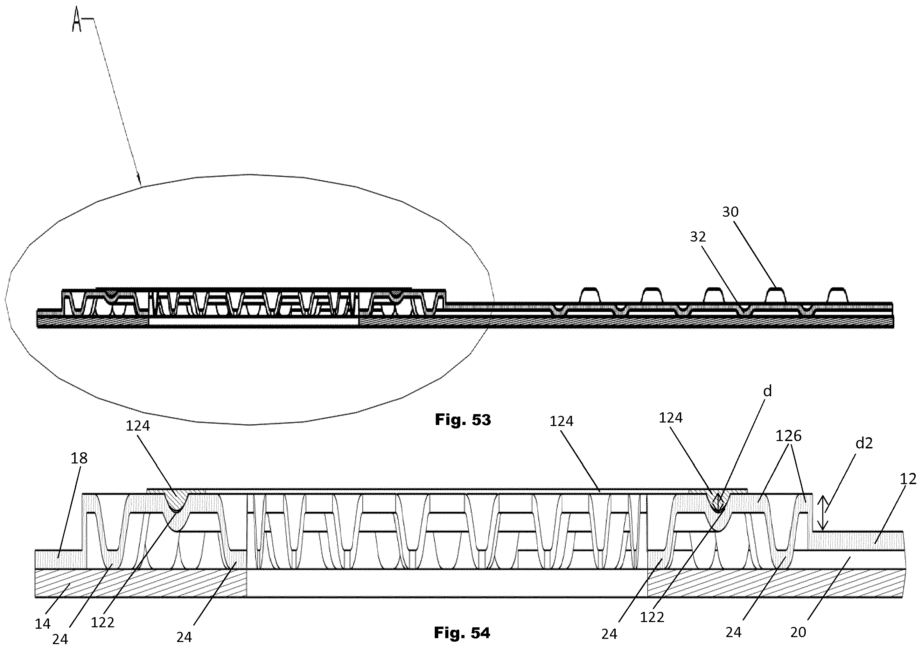

Referring also to figures 53 and 54, with figure 54 being a more detailed view, it can be seen that the annular groove 122 accommodates a volume (or bead) of the sealant material 124 and the material 124 also extends in a ring over the top surface of the shaped port features to thus function like the gasket 34 of the previous embodiments. With this arrangement, the thickness of the sealant material 124 can be significantly less than is generally needed for a pre-formed gasket. Again, an electrically insulating seal may be used or alternatively an electrically insulating coating or paste layer may be used on one or both of the abutting surfaces (the hard stop surface, e.g. formed by the raised portion 126 and metal substrate of the adjacent fuel cell unit) of adjacent fuel cell units to prevent electrical contact between adjacent fuel cell units via the abutting surfaces.

The thickness of the gasket 34 of the previous embodiments helped provide a space between adjacent fuel cell units for air or fuel flow. To retain that space, the shaped port features 24 can be provided in a raised portion 126 of the separator plate 12, as shown in figure 52, 53 and 54. This also ensures that the final height of the top of the gasket seal material still is the correct height to allow the outer surface of the electrochemically active layers to correctly align and contact the tops of the outwardly extending central projections 30 during the compression or clamping of the stack into its final configuration.

The groove 122 is shown in figure 54, the groove has a depth, d, and it is less deep than the recesses 24 either side of it as it needs not to create a barrier for fluid flow from the fluid port 22 into the fluid volume 20 of the fuel cell unit. Preferably, the depth, d, of groove 122 is less than depth, d2, of the raised portion 126. Preferably still, the depth, d, of the groove is between 5 and 75% of the depth, d2, of the raised portion 126. Typically, this may correspond to the groove 122 extending into the space between the metal support plate and the separator plate by between 5 to 80%, or more preferably between 10 and 50%, and preferably either way less than 50%, of the depth of the extension of the recesses 24. The depth may be measured externally, as indicated by d and d2 in Fig. 54, or can be measured internally across the internal height of the internal space of the fuel cell unit.

The raised portion 126 within which the annular groove 122 is disposed may act as a hard stop feature, similar to the hard stop feature of Figures 47 to 50. It would of course be possible to include, in addition to the annular groove, projections to provide a similar hard stop feature to that of Figures 47 to 50 so as to help avoid over compression of the seal material/stack. Likewise, it could even be possible to use the liquid applied seal material, rather than a pre-formed gasket, without an annular groove by surface fitting it, e.g. on a flat annular surface. However, not having the groove could result in a greater likelihood of seal failure because the groove provides a volume into which a portion of the seal material may be pushed during compression (anchored), and without the groove the seal material might be pushed away from regions of the sealing surface, for example due to small misalignments of the stack. Seal failure would allow mixing of fuel and air within the stack, which is undesirable. The annular groove is thus more preferred as a solution for offering greater service life for the stack during use.

Finally, referring to figure 41, an illustration of a stack of fuel cell units according to the first embodiment is illustrated. This is before any housing or compression bolts, or top and bottom plates 62, 64 are added. It is to illustrate the chimneys (internal manifold here formed by multiple aligned ports and aligned gaskets) 72, 74, through the top of which the internal edges of the metal support plate 14, the separator plate 12 and the gasket 34 can be seen. Fluid in the chimney can enter the fluid volume 20 within each fuel cell unit 10 between the metal support plate 14 and the separator plate 12 of each fuel cell unit, but not between adjacent fuel cell units 10 because of the gasket 34, whereas fluid external of the fuel cell units can pass to the space between the adjacent cells, other than at the gasket and the chimney, e.g. at arrows 76, as the sides/edges between them are open.

In summary, there is provided a metal-supported fuel cell unit 10 comprising a separator plate 12 and metal support plate 14 such as a stainless steel foil bearing chemistry layers 50, which overlie one another to form a repeat unit, at least one plate having flanged perimeter features 18 formed by pressing the plate, the plates being directly adjoined at the flanged perimeter features to form a fluid volume 20 between them and each having at least one fluid port 22, wherein the ports are aligned and communicate with the fluid volume, and at least one of the plates has pressed shaped port features 24 formed around its port extending towards the other plate and including elements spaced from one another to define fluid pathways to enable passage of fluid from the port to the fluid volume. A stack may therefore be formed from minimal number of different, multi-functional components. Raised members 120 also formed by pressing may receive a gasket 34, act as a hard stop or act as a seal bearing surface.

Alternative arrangements and shapes will also be within the scope of the present invention, for example in which instead of rounded fingers, squared off fingers are provided. Likewise, the shape of the shaped port features, as a group of elements, do not need to match the shape of the area of the cell unit to which they are provided, as the fluid exiting the fluid pathways can circulate around any gap between the group of elements and the flanged perimeter features.

These and other features of the present invention have been described above purely by way of example. Modifications in detail may be made to the invention within the scope of the claims and particularly in respect of the shape of the fuel cell unit, the electrochemically active layers and the arrangement of the elements of the shaped port features and central projections for enabling fluid flow between fluid ports through the fluid volume within the fuel cell unit.

### Reference Signs:

### Prior Art

- 90: - fuel cell unit
- 110: - metal support plate
- 150: - separator plate
- 150A: - up & down corrugations
- 152: - spacer
- 160: - large space/aperture
- 180: - fluid port
- 200: - fluid port

### Invention

- 10: - fuel cell unit
- 12: - separator plate
- 14: - metal support plate
- 18: - flanged perimeter features
- 20: - fluid volume
- 22: - fluid port
- 24: - shaped port features
- 26: - elements of the shaped port features
- 28: - fluid passageways
- 30, 32: - central projections
- 34: - gaskets
- 48: - small holes
- 50: - electrochemically active layer
- 52: - separate component
- 54: - window
- 58: - ridge
- 60: - contact pad
- 62: - top compression plate
- 64: - bottom compression plate
- 66: - bolts
- 68: - entry position
- 70: - exit position
- 72: - first chimney
- 74: - second chimney
- 120: - raised members
- 122: - annular groove
- 124: - in-situ seal
- 126: - raised portion
- h: - height of raised members
- t: - thickness of gasket
- d: - depth of groove
- d2: - depth of raised portion

## Claims

1. A metal-supported solid oxide fuel cell unit (10) comprising:
a separator plate (12); and
a metal support plate (14) carrying fuel cell chemistry layers (50) provided over a porous region;
the separator plate (12) and the metal support plate (14) overlying one another to form a repeat unit;
wherein:
at least one of the separator plate (12) and the metal support plate (14) comprises flanged perimeter features (18) formed by pressing the plate to a concave configuration;
the separator plate (12) and the metal support plate (14) are directly adjoined at the flanged perimeter features (18) to form a fluid volume (20) therebetween;
at least one fluid port (22) is provided in each of the separator plate (12) and the metal support plate (14) within the flanged perimeter features (18), the respective fluid ports (22) being aligned and in communication with the fluid volume (20); and
at least one of the separator plate (12) and the metal support plate (14) is provided with shaped port features (24) formed around its port (22) by pressing, which shaped port features (24) extend towards the other plate, and elements of the shaped port features (24) are spaced from one another to define fluid pathways between the elements from the port (22) to enable passage of fluid from the port (22) to the fluid volume (20).

2. A metal-supported fuel cell unit according to claim 1, wherein the fuel cell chemistry layers take the form of an electrochemically active layer comprising an anode, an electrolyte and a cathode formed onto the metal support plate over the porous region that is provided within the metal support plate.

3. A metal-supported fuel cell unit according to claim 1, wherein the porous region is provided on a separate plate over which the fuel cell chemistry layers, taking the form of an electrochemically active layer comprising an anode, an electrolyte and a cathode, are formed, and the separate plate is provided over a window on the metal support plate.

4. A metal-supported fuel cell unit according to any one of the preceding claims, wherein the fluid pathways from the fluid port to the fluid volume are tortuous and/or cross one another at a plurality of locations.

5. A metal-supported fuel cell unit according to any one of the preceding claims, wherein the flanged perimeter features are only provided on the separator plate.

6. A metal-supported fuel cell unit according to any one of the preceding claims, wherein the shaped port features are only provided on the separator plate.

7. A metal-supported fuel cell unit according to any one of the preceding claims, wherein the shaped port features are the same height above the surface from which they extend as the distance between opposed inner surfaces of the two plates.

8. A metal-supported fuel cell unit according to any one of the preceding claims, wherein at least one of the separator plate and the metal support plate is provided with one or a plurality of raised members formed by pressing, that extend away from the other plate and that are arranged around the or each fluid port.

9. A metal-supported fuel cell unit according to claim 8, wherein there are a plurality of raised members so arranged to define a space for accommodating a gasket within the raised members and/or a plurality of raised members so arranged to define a perimeter for accommodating a gasket outside of the raised members.

10. A metal-supported fuel cell unit according to claim 8, wherein there are a plurality of raised members interspersed amongst the shaped port features.

11. A metal-supported fuel cell unit according to claim 8, wherein the or each raised member is positioned outside of the shaped port features.

12. A metal-supported fuel cell unit according to any one of claims 8 to 11, wherein the or each raised member has a peak that defines a hard stop surface against which an adjacent fuel cell unit, or a part extending therefrom, can bear during assembly of a stack of the cell units.

13. A metal-supported fuel cell unit according to claim 12, wherein there are multiple raised members defining hard stop surfaces and the hard stop surfaces all lie in a common plane.

14. A metal-supported fuel cell unit according to any one of the preceding claims, wherein the separator plate and the metal support plate are directly adjoined at the flanged perimeter features by welding around the flanged perimeter features.

15. A solid oxide fuel cell stack comprising a plurality of fuel cell units according to any one of claims 1 to 14, the fuel cell units being stacked upon one another with seals around the fluid ports between adjacent fuel cell units, the seals optionally overlying the shaped port features.

16. The fuel cell stack according to claim 15, wherein the seals comprise gaskets.

17. The fuel cell stack according to claim 15, wherein the seals comprise in situ seals.

18. The fuel cell stack according to any one of claims 15 to 17 when dependent on claim 12, wherein the at least one seal that sits on a seal receiving surface of a lower one of the fuel cell units has a height above that seal receiving surface before the next fuel cell unit is stacked thereon, and the hard stop surface of the lower one of the fuel cell units has a height that is located above that seal receiving surface but below the height of the seal that sits on the seal receiving surface so as to provide a limit to compression between the adjacent fuel cell units.

19. The fuel cell stack according to any one of claims 15 to 18, wherein at least one of the seals is positioned partially in a groove that surrounds a respective fluid port for that seal, the groove being optionally located in a raised portion of the plate.

20. The fuel cell stack according to any one of claims 15 to 19, wherein the internal components of the fuel cell stack comprises only the stack of cell units and the seals, the seals optionally overlying the shaped port features around the respective fluid ports.

21. The fuel cell stack according to any one of claims 15 to 20, wherein the pressed shaped port features define concave pores on the outer surface of the plate in which they are formed, which pores of each set of shaped port features are covered by one of the seals, the pores optionally being located in a raised portion of the plate.

22. A method of manufacturing a metal-supported solid oxide fuel cell unit, the method comprising the steps of:
providing a separator plate (12);
providing a metal support plate (14); and
processing at least one of the metal support plate (14) and the separator plate (12) to form:
flanged perimeter features (18);
at least one fluid port (22) within the separator plate (12) and the metal support plate (14); and
shaped port features (24) formed around at least one of the at least one fluid ports (22),
the processing comprising at least pressing of the plate or plates to form the flanged perimeter features (18) to form a concave configuration in the plate or plates, and likewise pressing the shaped port features (24);
the method further comprising:
overlying the separator plate (12) and the metal support plate (14) over one another to form a repeat unit;
directly joining the separator plate (12) and the metal support plate (14) at the flanged perimeter features (18), wherein the flanged perimeter features (18) that form the concave configuration form a fluid volume (20) therebetween, wherein the shaped port features (24) extend towards the other plate, and elements of the shaped port features (24) are spaced apart from one another to provide fluid pathways from the port to the fluid volume (20), and optionally,
wherein the fluid ports (22) are cut before the pressing of the plate or plates to form the flanged perimeter features (18).

23. The method of claim 22, wherein the fuel cell unit is in accordance with any one of claims 1 to 14 or the stack is as defined in any one of claims 15 to 21.

## Patentansprüche

1. Metallgestützte Festoxid-Brennstoffzelleneinheit (10), umfassend:
eine Trennplatte (12); und
eine Metallstützplatte (14), die Brennstoffzellenchemieschichten (50) trägt, die über einem porösen Bereich bereitgestellt sind,
wobei die Trennplatte (12) und die Metallstützplatte (14) übereinander liegen, um eine Wiederholeinheit zu bilden,
wobei:
die Trennplatte (12) und/oder die Metallstützplatte (14) geflanschte Randgebilde (18) umfasst, die durch Pressen der Platte in eine gehöhlte Konfiguration gebildet sind,
die Trennplatte (12) und die Metallstützplatte (14) an den geflanschten Randgebilden (18) unmittelbar aneinandergefügt sind, um einen Fluidraum (20) dazwischen zu bilden,
in der Trennplatte (12) und der Metallstützplatte (14) innerhalb der geflanschten Randgebilde (18) jeweils mindestens eine Fluidöffnung (22) bereitgestellt ist, wobei die jeweiligen Fluidöffnungen (22) aufeinander ausgerichtet sind und mit dem Fluidraum (20) in Verbindung stehen; und
die Trennplatte (12) und/oder die Metallstützplatte (14) mit geformten Öffnungsgebilden (24) versehen ist, die durch Pressen um ihre Öffnung (22) herum gebildet sind, wobei sich die geformten Öffnungsgebilde (24) in Richtung der anderen Platte erstrecken und Elemente der geformten Öffnungsgebilde (24) voneinander beabstandet sind, um Fluidbahnen zwischen den Elementen von der Öffnung (22) zu definieren, um das Hindurchgelangen von Fluid von der Öffnung (22) zu dem Fluidraum (20) zu ermöglichen.

2. Metallgestützte Brennstoffzelleneinheit nach Anspruch 1, wobei die Brennstoffzellenchemieschichten die Form einer elektrochemisch aktiven Schicht einnehmen, die eine Anode, einen Elektrolyten und eine Kathode umfasst, die über dem porösen Bereich, der innerhalb der Metallstützplatte bereitgestellt ist, auf der Metallstützplatte gebildet sind.

3. Metallgestützte Brennstoffzelleneinheit nach Anspruch 1, wobei der poröse Bereich auf einer separaten Platte bereitgestellt ist, über der die Brennstoffzellenchemieschichten, die die Form einer eine Anode, einen Elektrolyten und eine Kathode umfassenden elektrochemisch aktiven Schicht einnehmen, gebildet sind, und die separate Platte über einem Fenster auf der Metallstützplatte bereitgestellt ist.

4. Metallgestützte Brennstoffzelleneinheit nach einem der vorangehenden Ansprüche, wobei die Fluidbahnen von der Fluidöffnung zu dem Fluidraum gewunden sind und/oder einander an einer Vielzahl von Stellen queren.

5. Metallgestützte Brennstoffzelleneinheit nach einem der vorangehenden Ansprüche, wobei die geflanschten Randgebilde nur auf der Trennplatte bereitgestellt sind.

6. Metallgestützte Brennstoffzelleneinheit nach einem der vorangehenden Ansprüche, wobei die geformten Öffnungsgebilde nur auf der Trennplatte bereitgestellt sind.

7. Metallgestützte Brennstoffzelleneinheit nach einem der vorangehenden Ansprüche, wobei die Höhe der geformten Öffnungsgebilde über der Oberfläche, von der sie sich erstrecken, gleich dem Abstand zwischen einander gegenüberliegenden inneren Oberflächen der zwei Platten ist.

8. Metallgestützte Brennstoffzelleneinheit nach einem der vorangehenden Ansprüche, wobei die Trennplatte und/oder die Metallstützplatte mit einem oder einer Vielzahl von durch Pressen gebildeten erhöhten Elementen versehen ist, die sich von der anderen Platte weg erstrecken und die um die oder jede Fluidöffnung angeordnet sind.

9. Metallgestützte Brennstoffzelleneinheit nach Anspruch 8, wobei eine Vielzahl von erhöhten Elementen, die derart angeordnet sind, dass sie einen Platz zum Aufnehmen einer Flachdichtung innerhalb der erhöhten Elemente definieren, und/oder eine Vielzahl von erhöhten Elementen, die derart angeordnet sind, dass sie einen Rand zum Aufnehmen einer Flachdichtung außerhalb der erhöhten Elemente definieren, vorhanden ist.

10. Metallgestützte Brennstoffzelleneinheit nach Anspruch 8, wobei die geformten Öffnungsgebilde mit einer Vielzahl von erhöhten Elementen durchsetzt sind.

11. Metallgestützte Brennstoffzelleneinheit nach Anspruch 8, wobei das oder jedes erhöhte Element außerhalb der geformten Öffnungsgebilde positioniert ist.

12. Metallgestützte Brennstoffzelleneinheit nach einem der Ansprüche 8 bis 11, wobei das oder jedes erhöhte Element einen Gipfel aufweist, der eine Anschlagfläche definiert, gegen die eine benachbarte Brennstoffzelleneinheit oder ein sich davon erstreckender Teil während des Zusammensetzens eines Stapels der Zelleneinheiten drücken kann.

13. Metallgestützte Brennstoffzelleneinheit nach Anspruch 12, wobei mehrere Anschlagflächen definierende erhöhte Elemente vorhanden sind und die Anschlagflächen alle in einer gemeinsamen Ebene liegen.

14. Metallgestützte Brennstoffzelleneinheit nach einem der vorangehenden Ansprüche, wobei die Trennplatte und die Metallstützplatte an den geflanschten Randgebilden durch Schweißen um die geflanschten Randgebilde unmittelbar aneinandergefügt sind.

15. Festoxid-Brennstoffzellenstapel, umfassend eine Vielzahl von Brennstoffzelleneinheiten nach einem der Ansprüche 1 bis 14, wobei die Brennstoffzelleneinheiten mit Dichtungen um die Fluidöffnungen zwischen benachbarten Brennstoffzelleneinheiten aufeinander gestapelt sind, wobei die Dichtungen optional über den geformten Öffnungsgebilden liegen.

16. Brennstoffzellenstapel nach Anspruch 15, wobei die Dichtungen Flachdichtungen umfassen.

17. Brennstoffzellenstapel nach Anspruch 15, wobei die Dichtungen In-Situ-Dichtungen umfassen.

18. Brennstoffzellenstapel nach einem der Ansprüche 15 bis 17, wenn abhängig von Anspruch 12, wobei die mindestens eine Dichtung, die auf einer Dichtungsaufnahmefläche einer unteren der Brennstoffzelleneinheiten sitzt, eine Höhe über dieser Dichtungsaufnahmefläche aufweist, bevor die nächste Brennstoffzelleneinheit darauf gestapelt wird, und die Anschlagfläche der unteren der Brennstoffzelleneinheiten eine Höhe aufweist, die sich über dieser Dichtungsaufnahmefläche aber unter der Höhe der Dichtung, die auf der Dichtungsaufnahmefläche sitzt, befindet, um eine Begrenzung für die Stauchung zwischen den benachbarten Brennstoffzelleneinheiten bereitzustellen.

19. Brennstoffzellenstapel nach einem der Ansprüche 15 bis 18, wobei mindestens eine der Dichtungen teilweise in einer Nut positioniert ist, die eine jeweilige Fluidöffnung für diese Dichtung umgibt, wobei sich die Nut optional in einem erhöhten Abschnitt der Platte befindet.

20. Brennstoffzellenstapel nach einem der Ansprüche 15 bis 19, wobei die innenliegenden Komponenten des Brennstoffzellenstapels nur den Stapel von Zelleneinheiten und die Dichtungen umfassen, wobei die Dichtungen optional über den geformten Öffnungsgebilden um die jeweiligen Fluidöffnungen liegen.

21. Brennstoffzellenstapel nach einem der Ansprüche 15 bis 20, wobei die gepressten geformten Öffnungsgebilde gehöhlte Poren auf der Außenoberfläche der Platte, in der sie gebildet sind, definieren, wobei die Poren jedes Satzes geformter Öffnungsgebilde von einer der Dichtungen abgedeckt sind, wobei sich die Poren optional in einem erhöhten Abschnitt der Platte befinden.

22. Verfahren zum Herstellen einer metallgestützten Festoxid-Brennstoffzelleneinheit, wobei das Verfahren folgende Schritte umfasst:
Bereitstellen einer Trennplatte (12);
Bereitstellen einer Metallstützplatte (14); und
Bearbeiten der Metallstützplatte (14) und/oder der Trennplatte (12), um Folgendes zu bilden:
geflanschte Randgebilde (8);
mindestens eine Fluidöffnung (22) innerhalb der Trennplatte (12) und der Metallstützplatte (14); und
geformte Öffnungsgebilde (24), die um mindestens einen der mindestens einen Fluidöffnungen (22) gebildet sind,
wobei die Bearbeitung mindestens das Pressen der Platte oder der Platten zum Bilden der geflanschten Randgebilde (18), um eine gehöhlte Konfiguration in der Platte oder den Platten zu bilden, und ebenso das Pressen der geformten Öffnungsgebilde (24) umfasst,
wobei das Verfahren ferner Folgendes umfasst:
Übereinanderlegen der Trennplatte (12) und der Metallstützplatte (14), um eine Wiederholeinheit zu bilden,
unmittelbares Aneinanderfügen der Trennplatte (12) und der Metallstützplatte (14) an den geflanschten Randgebilden (18), wobei die geflanschten Randgebilde (18), die die gehöhlte Konfiguration bilden, einen Fluidraum (20) dazwischen bilden, wobei sich die geformten Öffnungsgebilde (24) in Richtung der anderen Platte erstrecken und Elemente der geformten Öffnungsgebilde (24) voneinander beabstandet sind, um Fluidbahnen von der Öffnung zu dem Fluidraum (20) bereitzustellen, und wobei optional
die Fluidöffnungen (22) vor dem Pressen der Platte oder der Platten zum Bilden der geflanschten Randgebilde (18) ausgeschnitten werden.

23. Verfahren nach Anspruch 22, wobei die Brennstoffzelleneinheit gemäß einem der Ansprüche 1 bis 14 ist oder der Stapel wie in einem der Ansprüche 15 bis 21 definiert ist.

## Revendications

1. Unité de pile à combustible à oxyde solide à support métallique (10) comprenant :
une plaque de séparation (12) ; et
une plaque de support métallique (14) portant des couches chimiques de pile à combustible (50) fournies par-dessus une région poreuse ;
la plaque de séparation (12) et la plaque de support métallique (14) étant superposées l'une sur l'autre pour former une unité de répétition ;
dans laquelle :
au moins une de la plaque de séparation (12) et de la plaque de support métallique (14) comprend des caractéristiques périmétriques à bride (18) formées par pression de la plaque en une configuration concave ;
la plaque de séparation (12) et la plaque de support métallique (14) sont directement attenantes aux caractéristiques périmétriques à bride (18) pour former un volume de fluide (20) entre elles ;
au moins un orifice de fluide (22) est fourni dans chacune de la plaque de séparation (12) et de la plaque de support métallique (14) à l'intérieur des caractéristiques périmétriques à bride (18), les orifices de fluide respectifs (22) étant alignés et en communication avec le volume de fluide (20) ; et
au moins une de la plaque de séparation (12) et de la plaque de support métallique (14) est pourvue de caractéristiques d'orifice façonnées (24) formées autour de son orifice (22) par pression, lesquelles caractéristiques d'orifice façonnées (24) s'étendent vers l'autre plaque, et des éléments des caractéristiques d'orifice façonnées (24) sont espacés les uns des autres pour définir des voies de fluide entre les éléments depuis l'orifice (22) pour permettre un passage de fluide depuis l'orifice (22) jusqu'au volume de fluide ( 20).

2. Unité de pile à combustible à support métallique selon la revendication 1, dans laquelle les couches chimiques de pile à combustible prennent la forme d'une couche électrochimiquement active comprenant une anode, un électrolyte et une cathode formée par-dessus la plaque de support métallique par-dessus la région poreuse qui est fournie au sein de la plaque de support métallique.

3. Unité de pile à combustible à support métallique selon la revendication 1, dans laquelle la région poreuse est fournie sur une plaque séparée sur laquelle sont formées les couches chimiques de pile à combustible, prenant la forme d'une couche électrochimiquement active comprenant une anode, un électrolyte et une cathode, et la plaque séparée est fournie par-dessus une fenêtre sur la plaque de support métallique.

4. Unité de pile à combustible à support métallique selon l'une quelconque des revendications précédentes, dans laquelle les voies de fluide allant du port de fluide au volume de fluide sont tortueuses et/ou se croisent à une pluralité d'emplacements.

5. Unité de pile à combustible à support métallique selon l'une quelconque des revendications précédentes, dans laquelle les caractéristiques périmétriques à bride ne sont fournies que sur la plaque de séparation.

6. Unité de pile à combustible à support métallique selon l'une quelconque des revendications précédentes, dans laquelle les caractéristiques d'orifice façonnées ne sont fournies que sur la plaque de séparation.

7. Unité de pile à combustible à support métallique selon l'une quelconque des revendications précédentes, dans laquelle les caractéristiques d'orifice façonnées sont de la même hauteur au-dessus de la surface à partir de laquelle elles s'étendent que la distance entre des surfaces intérieures opposées des deux plaques.

8. Unité de pile à combustible à support métallique selon l'une quelconque des revendications précédentes, dans laquelle au moins une de la plaque de séparation et de la plaque de support métallique est pourvue d'un ou plusieurs éléments surélevés formés par pression, lesquels s'étendent dans un sens d'éloignement par rapport à l'autre plaque et sont disposés autour de l'orifice ou de chaque orifice de fluide.

9. Unité de pile à combustible à support métallique selon la revendication 8, laquelle présente une pluralité d'éléments surélevés disposés de manière à définir un espace pour accueillir un joint d'étanchéité à l'intérieur des éléments surélevés et/ou une pluralité d'éléments surélevés disposés de manière à définir un périmètre pour accueillir un joint d'étanchéité à l'extérieur des éléments surélevés.

10. Unité de pile à combustible à support métallique selon la revendication 8, laquelle présente une pluralité d'éléments surélevés intercalés parmi les caractéristiques d'orifice façonnées.

11. Unité de pile à combustible à support métallique selon la revendication 8, dans laquelle le ou chaque élément surélevé est positionné à l'extérieur des caractéristiques d'orifice façonnées.

12. Unité de pile à combustible à support métallique selon l'une quelconque des revendications 8 à 11, dans laquelle le ou chaque élément surélevé présente un pic qui définit une surface d'arrêt rigide contre laquelle une unité de pile à combustible adjacente, ou une partie s'étendant à part de celle-ci, peut porter lors de l'assemblage d'un empilement des unités de piles.

13. Unité de pile à combustible à support métallique selon la revendication 12, laquelle présente plusieurs éléments surélevés définissant des surfaces d'arrêt rigides et les surfaces d'arrêt rigides reposent toutes dans un plan commun.

14. Unité de pile à combustible à support métallique selon l'une quelconque des revendications précédentes, dans laquelle la plaque de séparation et la plaque de support métallique sont directement attenantes aux caractéristiques périmétriques à bride par soudage autour des caractéristiques périmétriques à bride.

15. Empilement de piles à combustible à oxyde solide comprenant une pluralité d'unités de piles à combustible selon l'une quelconque des revendications 1 à 14, les unités de piles à combustible étant empilées les unes sur les autres avec des joints autour des orifices de fluide entre des unités de piles à combustible adjacentes, les joints recouvrant éventuellement les caractéristiques d'orifice façonnées.

16. Empilement de piles à combustible selon la revendication 15, dans lequel les joints comprennent des joints d'étanchéité.

17. Empilement de piles à combustible selon la revendication 15, dans lequel les joints comprennent des joints in situ.

18. Empilement de piles à combustible selon l'une quelconque des revendications 15 à 17 lorsqu'elle dépend de la revendication 12, dans lequel le au moins un joint qui repose sur une surface de réception de joint d'une unité inférieure des unités de piles à combustible a une hauteur au-dessus de cette surface de réception de joint avant que l'unité de pile à combustible suivante ne soit empilée dessus, et la surface d'arrêt rigide de l'unité inférieure des unités de piles à combustible a une hauteur située au-dessus de cette surface de réception de joint, mais en dessous de la hauteur du joint qui repose sur la surface de réception de joint de manière à limiter la compression entre les unités de piles à combustible adjacentes.

19. Empilement de piles à combustible selon l'une quelconque des revendications 15 à 18, dans lequel au moins un des joints est positionné partiellement dans une rainure qui entoure un orifice de fluide respectif pour ce j oint, la rainure étant éventuellement située dans une partie surélevée de la plaque.

20. Empilement de piles à combustible selon l'une quelconque des revendications 15 à 19, dans lequel les composants internes de l'empilement de piles à combustible ne comprennent que l'empilement d'unités de piles et les j oints, les j oints recouvrant éventuellement les caractéristiques d'orifice façonnées autour des orifices de fluide respectifs.

21. Empilement de piles à combustible selon l'une quelconque des revendications 15 à 20, dans lequel les caractéristiques d'orifice façonnées pressées définissent des pores concaves sur la surface extérieure de la plaque dans laquelle elles sont formées, lesquels pores de chaque ensemble de caractéristiques d'orifice façonnées sont recouverts par un des j oints, les pores étant éventuellement situés dans une partie surélevée de la plaque.

22. Procédé de fabrication d'une unité de pile à combustible à oxyde solide à support métallique, le procédé comprenant les étapes suivantes :
la fourniture d'une plaque de séparation (12) ;
la fourniture d'une plaque de support métallique (14) ; et
le traitement d'au moins une de la plaque de support métallique (14) et de la plaque de séparation (12) pour former :
des caractéristiques périmétriques à bride (18) ;
au moins un orifice de fluide (22) à l'intérieur de la plaque de séparation (12) et de la plaque de support métallique (14) ; et
des caractéristiques d'orifice façonnées (24) formées autour d'au moins un de l'au moins un orifice de fluide (22),
le traitement comprenant au moins la pression de la ou des plaques pour former les caractéristiques périmétriques à bride (18) pour former une configuration concave dans la ou les plaques, ainsi que la pression des caractéristiques d'orifice façonnées (24) ; le procédé comprenant en outre :
la superposition de la plaque de séparation (12) et de la plaque de support métallique (14) l'une sur l'autre pour former une unité de répétition ;
la jonction directe de la plaque de séparation (12) et de la plaque de support métallique (14) au niveau des caractéristiques périmétriques à bride (18), les caractéristiques périmétriques à bride (18) qui forment la configuration concave formant un volume de fluide (20) entre elles, les caractéristiques d'orifice façonnées (24) s'étendant vers l'autre plaque et des éléments des caractéristiques d'orifice façonnées (24) étant espacés les uns des autres pour fournir des voies de fluide depuis l'orifice jusqu'au volume de fluide (20), et éventuellement,
dans lequel les orifices de fluide (22) sont coupés avant la pression de la ou des plaques pour former les caractéristiques périmétriques à bride (18).

23. Procédé selon la revendication 22, dans lequel l'unité de pile à combustible est conforme à l'une quelconque des revendications 1 à 14 ou l'empilement est tel que défini dans l'une quelconque des revendications 15 à 21.
